# EUROPEAN PATENT SPECIFICATION

(11) **EP 2 769 615 B1**
(45) Date of publication and mention of the grant of the patent: **10.10.2018**
(21) Application number: 14155121.8
(22) Date of filing: 14.02.2014
(51) Int. Cl.: A01F 15/07

(54) **Apparatus and method for pushing wrapping material into a chamber**
Vorrichtung und Verfahren zum Schieben von Verpackungsmaterial in eine Kammer
Appareil et procédé d'alimentation d'un matériau d'emballage dans une chambre

(30) Priority: 22.02.2013 NL 2010350
(43) Date of publication of application: 27.08.2014
(73) Proprietor: Forage Company B.V., 3147 PB Maassluis (NL)
(72) Inventor: Rodewald, Peter, 3147 PA Maassluis (NL); Schlichting, Malte Cornelius, 3147 PA Maassluis (NL)
(74) Representative: AGCO Intellectual Property Department

(56) References cited:
- EP-A1- 1 808 065
- DE-A1-102004 023 701
- US-A1- 2002 184 861

## Description

### BACKGROUND

The invention refers to an apparatus and a method for pushing wrapping material into an inlet of a chamber. An object in this chamber has to be wrapped with this wrapping material. A problem solved by the invention occurs in particular in a baler which forms a cylindrical bale of agricultural material. The baler forms the bale in a pressing chamber and wraps this bale with a net or with a plastic sheet.

### STATE OF THE ART

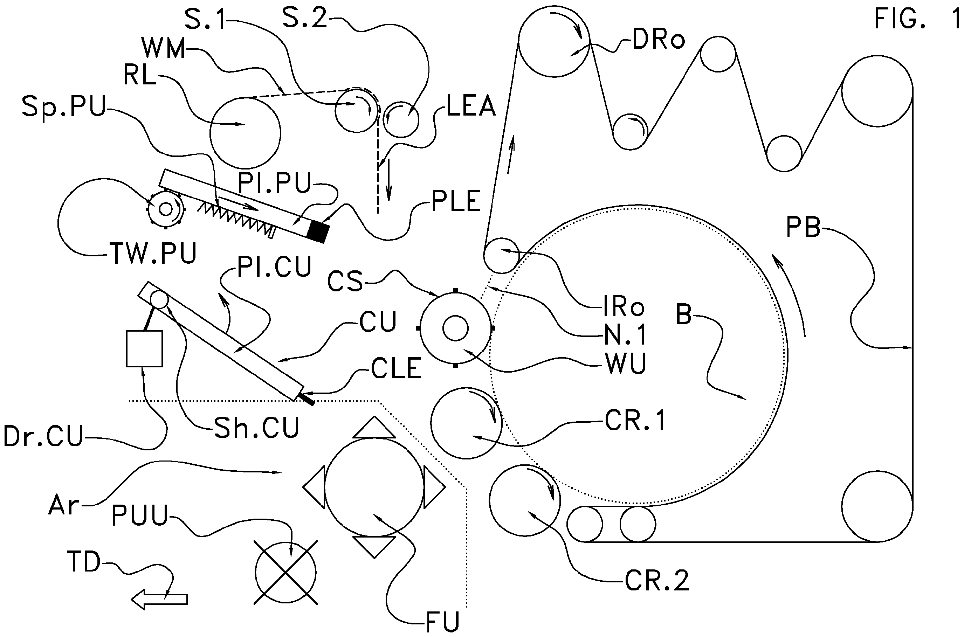

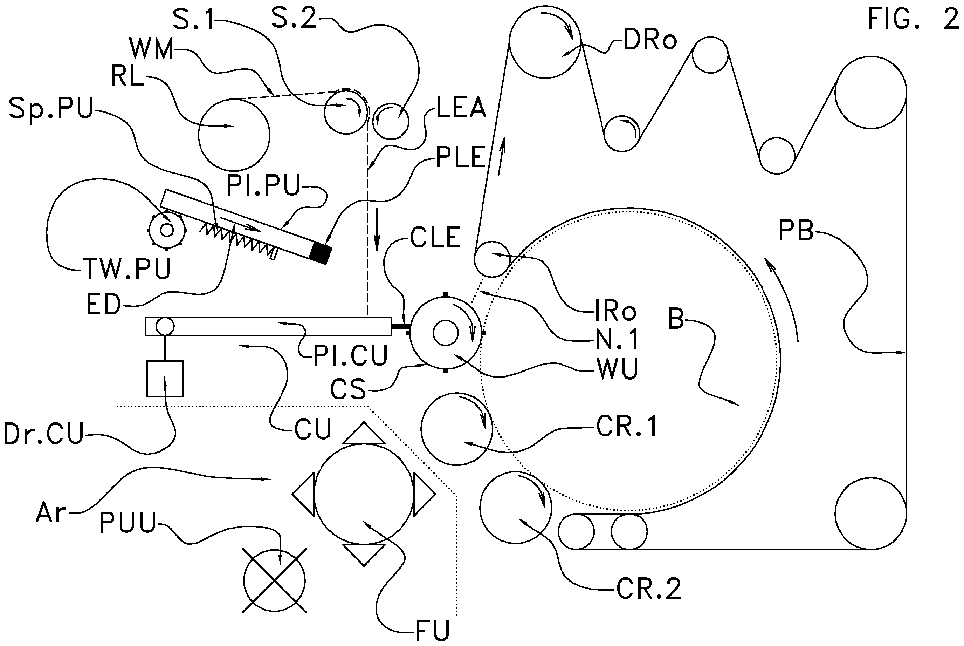

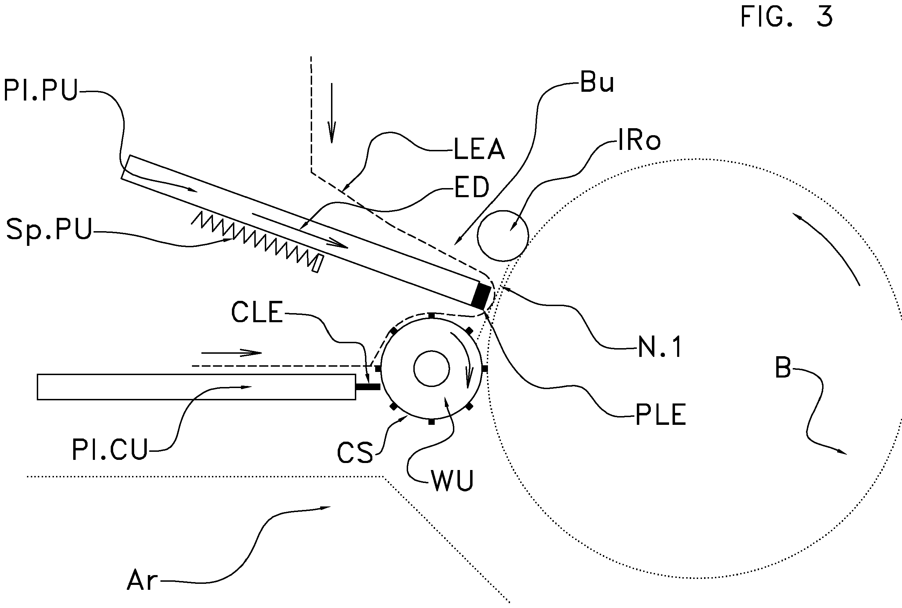

In EP 1808065 A1 a bale wrapping device 200 is described. A bale 400 is formed in a bale forming chamber 202 and is wrapped by a device 100, cf. Fig. 1. A net 1 is pulled off from a reel 10 by a first drive role 21 and a second compression role 22, cf. Fig. 2 and Fig. 3. Afterwards the net 1 is inserted into the bale forming chamber 202 through an inlet 5. The inlet 5 is formed between a guiding roller 205 and a tumbling roller 206. The guiding roller 205 guides several round belts 204 which contribute to forming the bale 400, cf. Fig. 3. The feeding means 21, 22 are arranged with a distance to the inlet 5 to allow debris to be dropped. A supporting means 3 can be moved into a receiving position 6 away from the inlet 5 and into a position near the inlet 5, cf. Fig. 2. When being moved from the receiving position 6 towards the inlet 5, the supporting means 3 urges the net 1 into the inlet 5. In one implementation a supporting plate 31 of the supporting means 3 urges the net 1 in the inlet 5. Two bars 32 are rotatable mounted and carry the supporting plate 31 from below, cf. Fig. 3. An electrical motor brings the bars 32 into the receiving position 6 against the force of a spring. When the bars 32 are unlocked, the spring moves the bars 32 and the supporting plate 31 rapidly towards the inlet 5.

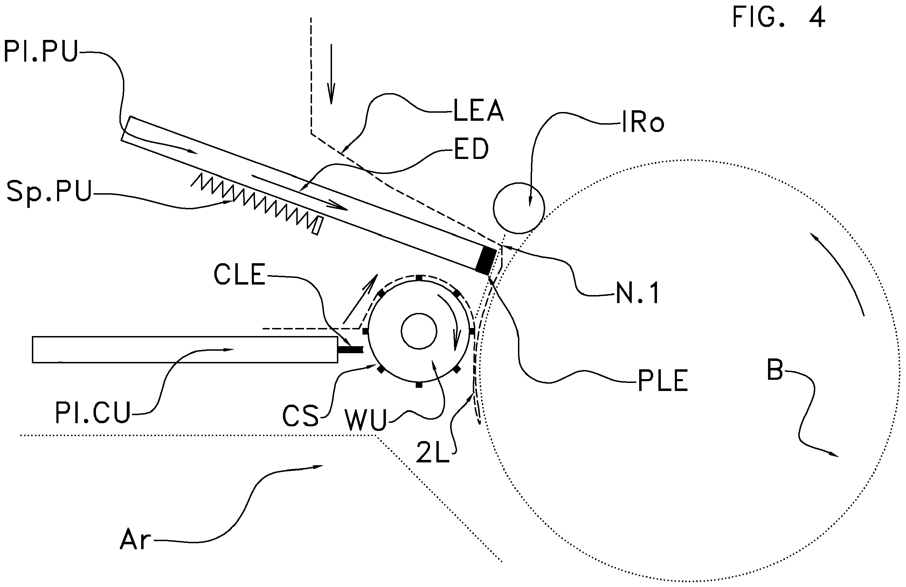

Fig. 1 of DE 102004023701 A1 shows a baler ("Maschine 1") with a bale forming apparatus ("Ballenformeinrichtung 2") in a bale forming chamber ("Ballenkammer 3"). Material is conveyed through an inlet ("Einlassoffnung 4"). Wrapping material ("Wickelmaterial 28") is inserted through a further inlet 5 into the chamber 3. A wrapping device ("Wickelvorrichtung 26") for wrapping a bale 29 comprises a reservoir ("Vorratsspeicher 27") and a positioning means ("Stellmittel 31") with a lever arrangement ("Hebelanordnung 33") at the side 32, cf. Fig. 2. A first lever arm ("erster Schwenkarm 34") can be pivoted around an axis 36. A guiding plate ("Fuhrungsplatte 37") and a conveying unit ("Förderelement 38") in the form of a roller together form a guiding track for the wrapping material 28. The guiding plate 37 can be shifted by the lever arm 34. Fig. 2 shows the wrapping device in the feeding position ("Zuführstellung"). The wrapping material 28 is guided around the guiding rollers ("Umlenkrollen 47, 48") and a cutting rod ("Schneidestange 42") into the nip 5 arranged between the two rollers 11, cf. Fig. 2. A brake ("Bremse 44") decelerates and stops the feeding of further wrapping material 28. The roller 38 and afterwards the rotating bale 29 grasp the wrapping material 28. The positioning means 31 pivots the lever arm 34 into the position of Fig. 3. The brake 44 is released. If the wrapping of the bale 29 is completed, the cutting arm 43 is moved into the position of Fig. 4 and the wrapping material 28 is severed. The leading edge of the wrapping material 28 is disposed on the feeding table ("Zuführtisch 52") or directly on the feeding roller 38. The feeding table 52 improves the transfer of the wrapping material 28 into the inlet 5.

US 2002/0184861 A1 discloses a round baler 1 with a bale wrapping system 30. Net wrap 41 taken from the bale wrapping system 30 is placed on a net wrap delivery assembly 50. This net wrap delivery assembly 50 places the net wrap 41 onto the circumferential surface 36 of a bale in a bale forming chamber, cf. par. [0029]. An assembly frame 54 of the net wrap delivery assembly 50 is kept on two pivotal arms 51 which can pivot around pivot 55, cf. Fig. 3 and par. [0030]. An actuator 70 can pivot the net wrap delivery assembly 50. For inserting the net wrap 41 into the baling chamber 24a, the actuator 70 rotates the net wrap delivery assembly 50. Thereby an upper baffle 53a and lower baffle 53b take the net wrap 41, cf. Fig. 7 and par. [0032].
In EP 1776860 B1 a bale 8 is wrapped with wrapping material 14. The leading end 7 of the wrapping material 14 is conveyed until it reaches a feed point at the surface of the bale 8. A pull-off device 2 pulls off the wrapping material 14 from a supply role 1. A feed mouth 5 feeds and guides the wrapping material 14 towards the feed point and holds the cut end of the wrapping material 14 after a severing step. The feed mouth 5 can be pivoted between an operative feeding position, cf. Fig. 1, and a withdrawn position, cf. Fig. 2 to Fig. 4. The pull-off device 2 pulls a predetermined length of wrapping material 14 from the supply role 1. Simultaneously the feed mouth 5 is pivoted from the withdrawn position into the feeding position. Afterwards the pull-off device 2 pulls off wrapping material 14 with a velocity which is less than the rotational speed of the bale 8 in the chamber. By this a tension of the wrapping material 14 is achieved.

In EP 1734806 B1 wrapping material 3 is inserted into the baling chamber 34 through a gap 38 between a feed roller 36 and a further roller 37. A dispensing device 1 can be moved between a rest position, cf. Fig. 1, a net gripping position, cf. Fig. 2, and an operative position during the wrapping of the bale. A set of rollers 26, 27 grip a loose end of the wrapping material 3. When the dispensing device 1 is in the second position (the net gripping position), a sheet or plate 39 and the roller 36 engage the free end 3" of the wrapping material 3, cf. Fig. 2. In one embodiment the plate 31 pushes the free end 3" towards the roller 36 which has rips 40.

Fig. 1 of DE 9211541 U1 shows a round baler with a chamber for creating and wrapping a bale ("Wickelraum 8"). The bale rotates in the direction of the arrow 12 and is to be wrapped into wrapping material ("Füllbahn 13") which is initially stored on a reel ("Vorratsrolle 15"). Two feeding rollers ("Abzugswalzen 18, 19") pull wrapping material 13 from the reel 15. A jogger element ("Rüttelteil 24") rotates a pivoting axis ("Schwenkachse 25") being perpendicular to the drawing plane of Fig. 2 and Fig. 3. A lever 26 connects the jogging element 24 with a spring ("Feder 27"). A rope ("Seil 28") extends the spring 27 which in turn makes the jogging element 24 rotating. A connecting lever ("Koppelglied 29") is pressed against a kind of a cam ("Kurvenbahn 30"). This cam 30 belongs to a wrapping roller ("Wickelwalze 9"). The wrapping roller 9 with the cam 30 rotates around the axis 32. The rotating cam 30 makes the connecting lever 29 oscillating. The wrapping material 18 sags down from the feeding rollers 18, 19 and is guided by the oscillating jogging element 24 towards the inlet ("nip 7"). A guiding sheet ("Leitblech 35") closes the space between the feeding roller 19 and the wrapping roller 9. This element prevents the wrapping material 13 to be guided against the wrapping roller 9 which event is undesired.

Fig. 1 of DE 3617155 A1 discloses a round baler ("Rundballenpresse 1") with a pressing chamber ("Pressraum 3") and a wrapping arrangement ("Hülleinrichtung 7"). Crop material ("Erntegut 2") is picked up and is conveyed through a crop material inlet ("Guteintrittsöffnung 6") into a pressing chamber 3 where a bale ("Erntegutballen 8") is formed. The wrapping arrangement 7 wraps a bale 8 in the pressing chamber 3 with a portion of wrapping material ("Hüllbahn 13"). This wrapping arrangement 7 has a reel ("Vorratsrolle 14"), a feeding mechanism ("Zuführmechanismus 15") and a cutting mechanism ("Schneideeinrichtung 16"), cf. Fig. 2.

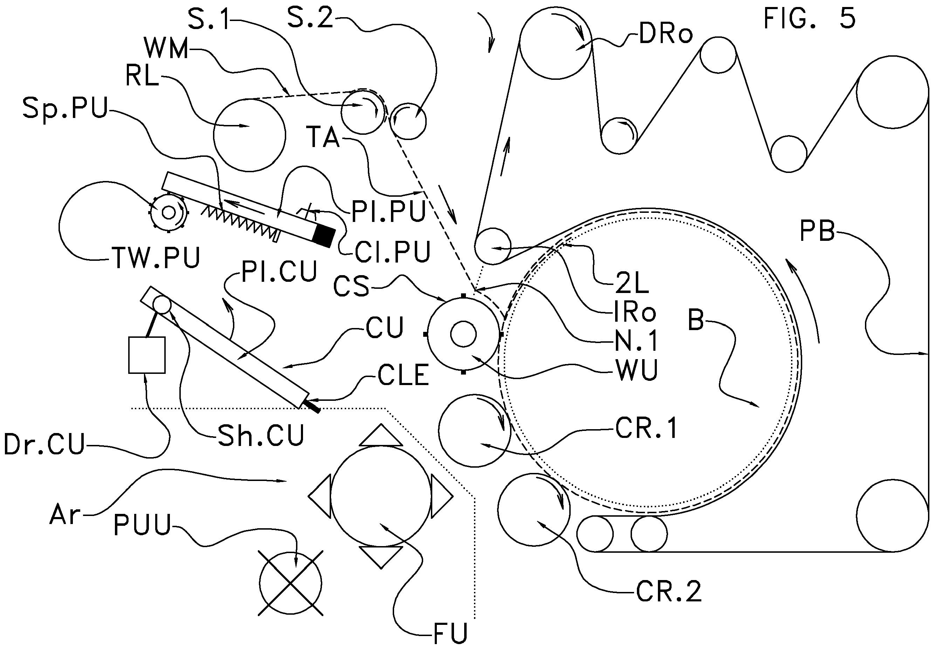

The piston-cylinder unit ("Kolben-Zylinder-Einheit 18") of DE 3617155 A1 clamps the wrapping unit 13 by means of a clamping unit ("Klemmeinrichtung 26") and pulls off wrapping material 13 from the reel 14. A U-shaped cover ("U-förmige Abschirmung 46") protects the knife ("Trennmesser 44"), cf. Fig. 3. The free end 13a of the wrapping material 13 is placed onto a down holder ("Niederhalter 55"). The feeding mechanism 15 moves the free end 13a towards the starter roller ("Starterrolle 11"). The free end forms a loop ("Schlaufe") which is shown in Fig. 4 with dotted lines. The free end 13b of the loop is grasped by the circumferential surface ("Umfangsfläche 12") of the starter roller 11. This free end 13b is conveyed through the nip between the starter roller 11 and the pressing roller ("Antriebswalze 9") and later through the inlet 6 into the pressing chamber 3, cf. Fig. 5. The wrapping material 13 is guided around the cover ("Abschirmung 47") and the corresponding guiding bar ("Gegenumlenkleiste 48"), cf. Fig. 4. The bale 8 rotates in the pressing chamber 3 and takes the wrapping material 13 ("wird mitgenommen"). The knife 44 severs the wrapping material 13.

US 6,446,548 B2 discloses a round baler which wraps a rotating bale 52 with net provided from a supply role 54 or with twine provided from supply roles 56, cf. Fig. 2 and Fig. 3. A pusher or duckbill 60 is mounted on a pivot 62. A knife assembly 74 is pivoted around an axis 76 and is connected to the duckbill 60 by a linkage 78.

In US 6,622,463 B1 a baler 10 with a web wrap dispensing or feed mechanism 70 is described, cf. Fig. 1 and Fig. 2. A bale 58 is formed in a baling chamber 56. Two net feed rollers 82, 84 feed wrapping material along a plane F. A belt 112 drives the feed roller 82 which in turn rotates a wrapping material reel 122. A portion 124 of wrapping material is guided along the feed roller 84 and through a nip 86 defined by a bale forming belt 42 and a pan 88 of a guide assembly 90, cf. Fig. 2. A pressure arm assembly 126 provides a constant force against the reel 122. A cut-off knife 194 with a cutting edge 196 can be pivoted against an anvil 198.

### PROBLEM, SOLUTION

Therefore it is an object of the invention to provide a feeding apparatus with the features of the preamble of claim 1 and a feeding method with the features of the preamble of claim 16 wherein the feeding of the wrapping material is to be performed such that it is afterwards inserted through the inlet into the chamber even if debris may have polluted the inlet and even if the wrapping material has a low stiffness and wherein the feeding is to be performed with a reduced risk of damaging the wrapping material.

The problem is solved by a feeding apparatus with the features of claim 1 and a feeding method with the features of claim 16. Preferred embodiments are specified in the dependent claims.

The problem is solved by a feeding apparatus with the features of claim 1 and a feeding method with the features of claim 16. Preferred embodiments are specified in the dependent claims.

The feeding apparatus and the feeding method according to the invention feed wrapping material into an inlet of a chamber. This chamber contains an object. The wrapping material has to be injected into this chamber. The object in the chamber has to be wrapped with the injected wrapping material.

The feeding apparatus comprises
- a wrapping material supplying unit,
- a pushing unit with a pusher plate, and
- a drive for moving the pusher plate.

The wrapping material supplying unit can be operated in a supplying mode. When being operated in the supplying mode, the wrapping material supplying unit supplies wrapping material from a reservoir. By supplying the wrapping material, a leading portion of the wrapping material is provided. This leading portion increases until the wrapping material reaches the inlet to the chamber. The leading portion forms a loose end area until the wrapping material reaches the inlet. This loose end area sags down by the force of gravity, is not tensioned but is slack and has a lower edge.

The pusher plate of the pushing unit is mounted such that this pusher plate can be moved in an engaging direction towards the inlet. The pushing unit drive moves the pusher plate in the engaging direction until the pusher plate reaches a final engaging position.

The sagging and increasing loose end area of the wrapping material comes in a position between the inlet and pusher plate of the pushing unit. The pusher plate being moved in the engaging direction hits laterally the slack loose end area in a position above the lower edge of the loose end area. This hitting step takes place before the pusher plate reaches its final engaging position and forms a bulge in the loose end area. This bulge is formed by one wrapping material portion above and one portion below the area in which the loose end area is hit. The pusher plate engages into this bulge.

The bulge is formed by the following two physical entities:
- the kinetic energy which the moved pusher plate urges onto the slack loose end area being hit by the pusher plate and
- the inertia of the sagging loose end area being moved laterally by the pusher plate.

The movement of the pusher plate is so quick that the bulge is formed by the kinetic energy and the inertia despite of the force of gravity.

After having hid the loose end area, the pusher plate is further moved in the engaging direction until the pusher plate reaches the final engaging position. This further movement shifts the bulge towards the inlet and causes the bulge to be inserted into the inlet and through the inlet into the chamber.

As a bulge is formed and shifted into the inlet, two layers of wrapping material are inserted simultaneously into the inlet.

### ADVANTAGES

One function of the pushing unit is that it pushes and urges the wrapping material towards the inlet and into the inlet This is performed by the quick movement of the pusher plate. The wrapping material is inserted even if the wrapping material has a low stiffness, e.g. is a net made of twine. By moving the pusher plate in the engaging direction the pushing function is performed regardless of the position and orientation of the loose end area with respect to the inlet and regardless of the stiffness and other physical properties of the wrapping material. This position and orientation of the sagging loose end area may change in a manner which cannot be predicted. Wind may blow against the loose end area. The feeding apparatus can be used as a part of a vehicle and this vehicle is operated in a hilly environment and therefore on a sloping ground. The same feeding apparatus may consecutively be used for different kinds of wrapping material. Therefore the pushing unit increases the reliability of the process of feeding and inserting wrapping material, in particular in comparison to a feeding roller which must be hit by the wrapping material or a duckbill which must grasp the wrapping material.

Thanks to the invention it is possible but not necessary to measure the position and the orientation of the wrapping material with respect to the inlet or the inclination of a vehicle with the feeding apparatus according to the invention. Even without a sensor for the position and orientation of the loose end area and without an inclination sensor it is ensured that the wrapping material is injected through the inlet into the chamber.

A further function of the moved pusher plate engaging into the inlet is that the pushing unit cleans the inlet by pushing debris and other material out of the inlet by pushing it into the chamber while being moved in the engaging direction. Such a cleaning function is required as otherwise the loose material might block the inlet. The pushing unit saves a specific cleaning unit for the inlet, in particular saves a roller or a blower. Such a specific cleaning unit requires space and must be monitored. The pushing unit performs the pushing function and the cleaning function in one single step when being moved in the engaging direction into the final engaging position. Therefore a specific cleaning step for the inlet can be performed but is not necessary. As the pusher plate shifts a bulge of wrapping material into the inlet, the inlet is better cleaned than by a pusher plate without wrapping material.

According to the invention the pusher plate of the pushing unit forms a bulge with two layers of wrapping material and inserts this bulge into the inlet such that it can be injected into the chamber. As the pusher plate is moved and forms the bulge, the creation of the bulge is controlled by the movement of the pusher plate and does not depend on the position of the wrapping material relative to the inlet or relative to a feeding roller. As mentioned above this relative position may change due to different inclinations, in particular if the invention is used on board of a vehicle, and due to environmental impacts.

The operation of the feeding apparatus does nearly not depend on the physical properties of the wrapping material in particular if it has a low stiffness. There the same feeding apparatus can process different kinds of wrapping material without the need of detecting what kind is actually used and without the need of adjusting the feeding apparatus.

Two layers of wrapping material are injected simultaneously into the inlet. This feature further reduces the risk that the step of injecting the wrapping material into the chamber fails. Two shifted layers will not drop out of the inlet. The pusher plate of the pushing unit is surrounded from two sides by the two layers of wrapping material, namely from upper and from below.

Often the object to be wrapped in the chamber is rotated. The rotating object and a counter-element mounted between two walls of the chamber together clamp and grasp the inserted wrapping material. Thanks to the invention two layers are inserted simultaneously. Two layers forming the front segment of the injected web of wrapping material have a higher thickness and provide a grid with more elements. Therefore the rotating object grasps and clamps the injected web with a higher reliability.

The feature that the pusher plate of the pushing unit forms a bulge decreases the risk that the pusher plate does not hit the wrapping material but misses it. In particular the undesired event is avoided that the pusher plate is moved in the engaging direction below the wrapping material such that the wrapping material drops onto the pusher plate and cannot be shifted by the pushing unit into the inlet. In contrast the pusher plate hits the wrapping material above the lower edge. Thanks to the invention a tolerance in the synchronization of the following two processes is achieved: Supplying the web of wrapping material and moving the pusher plate.

The following parameters can be set and can be changed and adjusted in order to even increase the reliability that the kinetic energy and the inertia together form a bulge in the loose end area and that the bulge is inserted into the chamber through the inlet and in particular to achieve a slack loose end area:
- the entire length of the loose end area in the moment of being hit by the pusher plate of the pushing unit,
- the vertical distance from the pusher plate to the lower edge of the sagging loose end area in the moment of hitting,
- the supplying velocity with which the wrapping material is supplied and with which the loose end area increases,
- the pushing velocity with which the pusher plate is moved in the engaging direction, and
- the distance over which the pusher plate shifts the wrapping material after having hit the loose end area.

An implementation of the invention can easily be adapted to given constrains, e.g. due to an existing feeding apparatus on which the invention is to be implemented. It is quite easy to adapt at least one of the parameters mentioned above. Some parameters can be adjusted by changing software of a control unit and without performing a mechanical adjustment.

The feature that a bulge is inserted into the inlet saves the need that the pushing unit or a conveying unit or a clamp pulls at the loose end area of the wrapping material and shifts the loose end area towards the inlet by pulling at the wrapping material. Such a pulling step may damage the wrapping material. In addition the pulling step requires a suitable design of the pushing unit, e.g. protrusions at the leading edge or a clamp with yaws which must be operated in a synchronized manner. Such protrusions may damage the wrapping material, in particular in case of a plastic film as the wrapping material. The pulling step may fail if the gripping mechanism fails. The pushing unit saves a clamping unit which requires two yaws or other elements which must be synchronized. Thanks to the invention the leading edge of the pushing unit can be implemented with protrusions or without protrusions.

According to the invention the bulge is formed by the kinetic energy of the moved pusher plate and the inertia of the loose end area. The pusher plate moves this bulge. Therefore it is not necessary that the front edge of the pusher plate carries protrusions, teeth, a serration, or other engaging elements for pulling at the loose end area. In contrast to an inserting member with a pulling function, the pusher plate of the invention does not urge a tension onto the sagging web of wrapping material. Such an engaging element at the front edge can cause damages of the wrapping material. A tension which is laterally applied onto the wrapping material can also damage the wrapping material. In particular the wrapping material may be torn and/or cut by an engaging element. Therefore the invention reduces the risk of damages while shifting the loose end area towards and into the inlet.

It is further not necessary to provide two elements which form a nip in which the bulge is formed. In particular the loose end area needs not to be guided around a roller or a stationary guiding element for forming the bulge. The invention therefore saves the need to provide such nip-forming elements. A plate has a higher mechanical stability and more simple construction than a nip-forming device.

The invention enables an easy and robust mechanical construction. In particular it is not necessary to guide the loose end area around a deflecting roller. It suffices to form an increasing sagging loose end area which is hit by the pusher plate.

The pusher plate urges the wrapping material with the bulge towards the inlet such that a bulge with two overlapping layers of wrapping material is inserted into the inlet. In general the object to be wrapped or a further element in the chamber grasped the wrapping material such that the wrapping procedure is continued. The wrapping material is grasped better and with higher process reliability if a bulge with two overlapping layers is inserted and not just a leading edge of the wrapping material.

The pusher plate of the pushing unit hits the loose end area above the lower edge of the sagging loose end area and forms a bulge and shifts this bulge into the inlet. Thanks to the invention the movement of the pusher plate needs not to be synchronized exactly with the operation of the wrapping material supplying unit. If the pusher plate hits the wrapping material a little bit too early or too late, nevertheless a bulge is formed and is inserted into the inlet.

### EMBODIMENTS

Preferably the pusher plate of the pushing unit engages into the inlet when being in the final engaging position. The following effect is achieved: Seen in a horizontal viewing direction perpendicular to the engaging direction the web of wrapping material is guided on a curved track between the two borders of the inlet and the front edge of the pusher plate. This embodiment even increases the reliability of the feeding apparatus as the risk is decreased that the wrapping material is not injected into the chamber containing the object to be wrapped. In addition the cleaning function of the pushing unit is increased.

In one embodiment the pusher plate of the pushing unit is moved in the engaging direction in a straight linear movement towards the inlet. This embodiment saves space and enables to use a simple drive as only a short lever arm occurs if at all. A spring can be used as a part of the pushing unit drive and can urge the linear movement of the pusher plate in the engaging direction. Such a pushing spring does not require a hydraulic or electric drive and moves the pusher plate very quickly. After having injected the wrapping material the pusher plate is moved in an opposite direction away from the inlet and into a parking position against the force of this spring. It is also possible to use an electric or hydraulic drive.

It is also possible that a lever arrangement rotates the pusher plate around a rotating axis in the engaging direction. The rotating axis is preferably below the pusher plate and is preferably perpendicular to the engaging direction.

Preferably the loose end area of the wrapping material arranged downwards from the wrapping material supplying unit remains slack and is not tensioned in the entire time span until the wrapping material reaches the chamber. In particular the bulge is formed in a slack loose end area and the bulge is inserted into the inlet without a tension in the loose end area. This embodiment increases the reliability that a sufficiently large bulge is formed. The embodiment with the loose end area remaining slack over the entire time span further reduces the risk that the wrapping material is damaged by the pusher plate moved in the engaging direction or that the pusher plate fails to push the wrapping material into the inlet due to a tensioned loose end area.

In one embodiment the supplying velocity is greater than the pushing velocity of the pusher plate.

In one embodiment the pusher plate of the pushing unit has a width which is nearly as large as the width of the inlet. The width is the horizontal dimension perpendicular to the engaging direction. This embodiment helps to shift the bulge along its entire width into the inlet. The entire circumferential surface of an object in the chamber is wrapped.

Preferably the pusher plate of the pushing unit has a convex free edge - seen in a direction perpendicular to the pusher plate's plane. When being moved in the engaging direction, this free edge is the leading edge pointing towards the inlet and hits the loose end area. Due to the convex shape a central portion of the leading edge first hits the loose end area and the pusher plate spreads the loose end area perpendicular or angularly to the engaging direction towards the left and to the right. This embodiment increases the reliability that the wrapping material takes the maximal possible width when being inserted into the inlet. This embodiment further increases the reliability that the entire width of the object in the chamber is wrapped with the wrapping material and no area adjacent to the side faces remains uncovered. If the object has a cylindrical shape, the entire circumferential surface of the object is wrapped.

It is possible that the pusher plate fails to hit the wrapping material at all or does not hit it in the proper time period. In this case the wrapping material might drop into an area being situated angularly below the inlet. A rotating unit, e.g. a feeding rotor with rigid tines, may grasp the wrapping material. This event may cause a blockade or a jam and may require a manual repair step and is therefore highly undesired. One embodiment for avoiding this undesired event is that a monitoring device monitors the operation of the pushing unit and stops the wrapping material supplying unit if a malfunction of the pushing unit is discovered.

A further embodiment for avoiding the wrapping material dropping into the area is as follows: A closing unit below the pusher plate covers from above the area in which the wrapping material should not drop. At least if the pusher plate of the pushing unit fails to hit the wrapping material, the wrapping material drops onto the closing unit and cannot drop into the area.

Preferably the closing unit is pivotally mounted and is pivoted or shifted into a closing position shortly before the properly operating pushing unit hits the wrapping material. Preferably the closing unit is pivoted into the operating position in every case and not only in the case that a malfunction of a pushing unit is discovered. Discovering the current position of the pusher plate and reacting on this discovered malfunction can be performed too late. After the wrapping material is inserted through the inlet into the chamber, the closing unit is preferably pivoted or shifted out of the closing position and back into a parking position.

Preferably the feeding apparatus further comprises a wrapping material feeding unit. This wrapping material feeding unit is arranged angularly below the pusher plate being in the final engaging position and besides the inlet. This wrapping material feeding unit contributes to convey the bulge towards the inlet.

In one embodiment the feeding apparatus is a part of a wrapping apparatus. The wrapping apparatus further comprises a chamber with the inlet. An object in the chamber has to be wrapped and is rotated in the chamber. The rotating object and a counter-element mounted at a wall of the chamber grasp and clamp the wrapping material which is inserted through the inlet into the chamber. Preferably the chamber is adapted for rotating a cylindrical object around the symmetrical axis of the object.

The invention can be implemented on board of a vehicle which moves over ground, picks up loose material from the ground, feeds the material into the chamber, forms a bale of material in the chamber, and wraps the bale serving as the object in the chamber with the wrapping material. In one embodiment the vehicle is an agricultural baler. In a further embodiment the invention is used as a part of a stationary plant, e.g. a device for processing recycling material, cartridges, paper, or waste objects.

These and other aspects of the invention and of the preferred embodiments will be even more apparent from the detailed embodiment as described below and will be elucidated in detail there.

### DESCRIPTION OF EMBODIMENT

The following description refers to a feeding apparatus with a pushing unit according to the invention and in addition a closing unit below the pushing unit. The closing unit is optional. The invention can also be implemented without this closing unit.

In the following an embodiment of the invention is described with reference to the following figures:
- Fig. 1 shows a baler applying the invention where the pushing unit and the pivotal closing unit both are in a parking position;
- Fig. 2 shows the baler of Fig. 1 where the closing unit is pivoted into the closing position and the wrapping material supplying unit has started to supply wrapping material while the pushing unit is still in the parking position;
- Fig. 3 shows the baler of Fig. 2 where the pusher plate of the pushing unit has hit the wrapping material and has formed a bulge and the bulge is shifted into the inlet;
- Fig. 4 shows the baler of Fig. 3 where two layers of a wrapping material are inserted into the chamber and are grasped by the rotating bale and the pusher plate is still in the final engaging position;
- Fig. 5 shows the baler of Fig. 4 where one entire layer is placed on the bale's surface and the pusher unit and the closing unit are back in the parking position.

According to the embodiment, the invention is used in a round baler which creates under pressure a round bale in a pressing chamber. This bale has a round-cylindrical shape with two circular front faces and a circumferential surface extending between the two front faces. The bale is created under pressure from loose agricultural crop material (hay, straw, silage or other fodder material).

The crop material is picked up from the ground by a pick-up unit of the baler and is fed through a feeding channel towards an inlet of the pressing chamber by means of a rotary rotor. The conveyed crop material is inserted through the inlet into the pressing chamber. In one embodiment the picked-up crop material is cut by several knives of the baler before being inserted into the pressing chamber.

The pressing chamber comprises several conveying units which convey the material along the circumferential wall of the pressing chamber. Each conveying unit comprises a conveying surface which comes in contact with the crop material and conveys it. Examples for conveying units are pressing rollers, pressing belts, and aprons. The crop material conveyed under pressure along the circumferential wall forms a growing cylindrical bale which rotates in the pressing chamber around a bale rotating axis. This bale rotating axis is perpendicular to the two front faces and perpendicular to the two parallel side walls of the pressing chamber.

Fig. 1 shows a round baler comprising the feeding apparatus according to the invention. The baler is propelled in the travelling direction TD from right to left in Fig. 1. In the embodiment a tractor or combine harvester or field chopper (not shown) pulls the baler. This round baler comprises
- a pick-up unit PUU with spring-mounted tines,
- a feeding unit FU with several rigid star-shaped rotating rotors (one rotor is sketched),
- two driven conveying rollers CR.1, CR.2 serving as starter rollers,
- a driven roller DRo and several idler rollers, among then the idler roller IRo, and
- a pressing belt PB guided around the rollers DRo, IRo, and around further idler rollers.

In the embodiment several parallel pressing belts are guided around the rollers.

The loose agricultural material is conveyed by the feeding unit FU and is inserted into the pressing chamber through the nip between the two adjacent conveying rollers CR.1, CR.2. The conveying direction is approximately opposite to the travelling direction TD.

The crop material inserted into the pressing chamber forms a growing bale B. This bale B is rotated around a rotating axis perpendicular to the drawing plane. This rotating axis is in Fig. 1 anti-clockwise. The rollers CR.1, CR.2, and WU contribute to forming and rotating the bale B.

After the creation of the bale B in the pressing chamber is completed, the bale B has to be wrapped in the pressing chamber with wrapping material. Afterwards the wrapped bale B is ejected out of the pressing chamber. The wrapping material may be a twine, a prefabricated net made of twine or a plastic sheet, e.g., and prevents the bale B from falling apart after being ejected out of the pressing chamber. The wrapping material is stored in a reservoir of the baler being arranged outside of the pressing chamber, e.g. in a reel which can rotate around a reel rotating axis being parallel to the bale rotating axis. In the embodiment the reservoir is arranged angular ahead of the chamber - seen in the travelling direction TD - and above the bale rotating axis. The distance from the reservoir to the ground is only as large as necessary such that a human operator can easily replace an empty reel with a new one.

The wrapping material is pulled off from this reel by a wrapping material supplying unit. In the embodiment two rollers rotate in different directions and pull the wrapping material which is between these two rollers. Preferably the two rollers clamp the web of wrapping material. One roller is preferably driven and rotates the other roller which operates as an idler roller. It is also possible that both rollers are driven.

In an alternative embodiment the wrapping material feeding unit is implemented by means of two clamping members forming a duck bill which grasps and pulls the wrapping material from the reservoir.

In Fig. 1 a reel RL for wrapping material WM is shown. The reel RL is placed such that the reel RL can be rotated around a rotating axis perpendicular to the drawing plane of Fig. 1. The two driven rollers S.1, S.2 pull off the wrapping material WM from the reel RL. It is also possible that only one roller S.1 or S.2 is driven and the other roller S.2 or S.1 operates as an idler roller and is set into rotation by the driven roller. A biasing member, e.g. a spring, urges the idler roller against the driven roller. The width of the wrapping material reel RL is sufficient to wrap the entire circumferential surface of the bale B by pulling off wrapping material WM from the reel RL. As the pulling rollers S.1, S.2 clamp and pull a web of wrapping material WM from the reel RL, the reel RL is rotated clockwise around a rotation axis perpendicular to the drawing plane of Fig. 1 and to the travelling direction TD and parallel to the rotating axis of the bale B.

The wrapping material WM of the embodiment has a low stiffness. After having left the contact surface between the two rollers S.1, S.2, a leading portion of the wrapping material WM forms a loose end area LEA which is not guided by an element of the baler but freely sags by the force of gravity as the wrapping material WM has a very low stiffness. This loose end area LEA is situated angularly above the chamber and above an inlet N.1 for the wrapping material WM and is - seen in the travelling direction TD - ahead of the chamber. The leading portion LEA increases as long as the rollers S.1, S.2 continue to pull wrapping material WM from the reel RL and until the loose end area LEA has passed the inlet N.1. This inlet N.1 has a width being at least as large as the distance between the two front faces of the bale B and extends preferably from sidewall to sidewall.

The wrapping material WM is conveyed through an inlet N.1 into the pressing chamber. In one embodiment the lower border of this inlet N.1 is formed by a conveying unit WU which conveys the wrapping material WM towards the rotating bale B. In a further embodiment a distance occurs between the chamber and the conveying unit WU. This conveying unit is denoted as the "feeding conveying unit". This feeding conveying unit WU may comprise a driven roller, a driven endless belt, or a chain conveyor. In the embodiment shown in the figures the feeding conveying unit WU is in contact with the rotating bale B and contributes to forming and rotating the bale B under pressure as well as to convey the wrapping material WM.

The baler can be operated in a hilly environment and can therefore be operated on a sloping surface. Therefore the baler and in particular the parts shown in the figures may be rotated around a horizontal axis being perpendicular to the drawing plane. Therefore the position of the increasing loose end area LEA with respect to the inlet N.1, the feeding conveying unit WU, and the feeding unit FU may vary and can differ from that position which is shown in the figures.

After the web of wrapping material WM is inserted through the inlet N.1 into the pressing chamber, the web of wrapping material WM is further injected into the space between this feeding conveying unit WU and the rotating bale B and is grasped by the rotating bale B. The rotating bale B now takes the task of pulling off the wrapping material WM from the reservoir RL. As soon as the bale has grasped the inserted wrapping material WM, both rollers S.1, S.2 are switched into an idler mode and operate as a free wheeler. Several layers of wrapping material WM are placed around the circumferential surface of the rotating bale B. If the wrapping of the bale B is finished, a cutting arrangement (not shown) severs the web of wrapping material WM such that the outer layer around the bale B is separated from the wrapping material WM on the reservoir RL.

The feeding conveying unit WU has a conveying surface CS for conveying and rotating the bale B as well as for conveying the wrapping material WM. The direction in which the conveying surface CS conveys the bale B and the wrapping material WM lies in the drawing plane of Fig. 1 and is perpendicular to the rotating axis of the bale B and perpendicular to the rotating axis of the reel RL. Preferably the conveying surface CS of the feeding conveying unit WU is provided with several protrusions, e.g. ribs, which extend perpendicular to the conveying direction over the entire width of the conveying surface CS. In the embodiment these protrusions extend parallel to the rotation axis of the roller WU.

Preferably the feeding conveying unit WU is permanently rotated. This is possible as the feeding conveying unit WU rotates the bale B as well as conveys the wrapping material WM towards the inlet N.1. Therefore the feeding conveying unit WU rotates during forming the bale B as well as during wrapping the bale B. Preferably a conveying roller CR.1, CR.2 drives the feeding conveying unit WU by means of a suitable transmission, e.g. a V belt.

The feeding conveying unit WU of Fig. 1 is driven clockwise and contributes to rotating the bale B. Several ribs on the conveying surface CS of the feeding conveying unit WU protrude from the conveying surface CS and extend along the circumferential surface of the feeding conveying unit WU and perpendicular to the drawing plane of Fig. 1. The rotating feeding conveying unit WU removes debris from the inlet N.1, in particular by means of the protrusions on the conveying surface CS. This debris is injected into the chamber.

In the embodiment the web of wrapping material WM has to be inserted into the pressing chamber through the inlet N.1, that is the nip between the driven feeding conveying unit WU and the idler role IRo around which the pressing belt PB is guided. In an alternative embodiment the web is inserted through a nip between the idler roller IRo and the conveying roller CR.1.

The invention refers to a feeding apparatus for supplying the wrapping material WM and feeding it towards the inlet N.1 such that the web of wrapping material WM can securely be injected through the inlet N.1 into the chamber. This feeding apparatus feeds wrapping material WM before the wrapping material WM is inserted through the inlet N.1 in the feeding chamber and into the space between the bale B and the feeding conveying unit WU. The wrapping material supplying unit with the rollers S.1, S.2 and the feeding conveying unit WU belong to the feeding apparatus of the embodiment.

The following problems occur during the step of conveying the wrapping material WM towards the inlet N.1 and introducing it into the pressing chamber:
- The freely sagging loose end area LEA of the slack wrapping material WM has to be inserted into the pressing chamber through the nip N.1. As the nip N.1 is arranged besides and not above the chamber, this nip N.1 is not arranged vertically below the pulling rollers S.1, S.2 but angular downwards. The wrapping material WM has a low stiffness and must therefore be guided on its way from the two driven pulling rollers S.1, S.2 to this nip N.1.
- As the inlet N.1 forms a slot or nip in the circumferential surface of the pressing chamber, the inlet N.1 can only be narrow. Otherwise a lot of loose crop material would be pressed out of the pressing chamber through the inlet N.1. The loose end area LEA has to be inserted through this narrow nip N.1.
- The position of the leading portion (loose end area) LEA relative to the nip N.1 can vary, in particular if the baler is operated in a hilly environment or is subjected to the influence of wind or other environmental impacts. The inclination of the baler may even vary during the step of supplying the wrapping material WM.
- The leading portion LEA of the wrapping material WM freely sags down after having left the pulling rollers S.1, S.2. This leading portion LEA must be moved laterally and approximately in the travelling direction TD, i.e. horizontally or sloping downwards, in order to hit the inlet N.1. It must be inhibited that the leading portion LEA is grasped by the rotating rotor FU arranged below the pulling rollers S.1, S.2. Fig. 1 shows with a dotted line the area Ar into which the wrapping material WM should not drop. The feeding unit FU with the rotor is situated in this area Ar.
- Debris is rubbed off from the rotating bale B. This debris may be inserted from the chamber into the inlet N.1 for the wrapping material WM and may block this inlet N.1 such that no wrapping material WM can be injected into the pressing chamber. This problem occurs in particular as wrapping material WM having the shape of a net or a twine may be very slack and have only a low stiffness.
- The same baler or several balers using the invention may apply different kinds of wrapping material. The wrapping material WM may become wet or remain dry. The stiffness and weight of the wrapping material WM may vary and can in general neither be predicted nobly measured exactly.

To solve these problems the feeding apparatus according to the embodiment of the invention comprises two parts which together guide the wrapping material WM towards the inlet N.1 and injects it into the inlet N.1 even in the case of debris in the inlet N.1 and prevents the wrapping material WM from dropping into the area Ar:
- a pushing unit and
- an optional closing unit CU being arranged below the pushing unit CU.

In the embodiment the pushing unit comprises a moveable pusher plate PI.PU. The closing unit CU comprises a further moveable plate PI.CU, the closure plate. Both plates PI.PU, PI.CU are preferably made of rigid material, e.g. of steel.

The closing unit CU can be pivoted or shifted from a parking position into a closing position and back from the closing position into the parking position. In the closing position the closure plate PI.CU of the closing unit CU closes the area Ar entirely or at least partially from above.

Fig. 1 shows the closing unit CU and the pushing unit both being in the parking position. As can be seen a distance between the area Ar and the closing unit CU above the area Ar occurs.

The pusher plate PI.PU of the pushing unit can be moved from a parking position in an engaging direction ED into a final engaging position and back from the final engaging position in a disengaging direction into the parking position. In the final engaging position the pusher plate PI.PU engages into the inlet N.1 without touching a roller IRo or WU or CR.1 and preferably without touching a bale B in the chamber.

In the embodiment the pusher plate PI.PU of the pushing unit can be moved by a linear movement in the engaging direction ED into the final engaging position. The engaging direction ED is horizontal or is sloping downwards seen in the conveying direction of the crop material. The disengaging direction is opposite to the engaging direction ED.

In one embodiment the closure plate PI.CU of the closing unit CU can also be moved by a linear movement into the closing position. In an alternative embodiment the closure plate PI.CU can be rotated or otherwise pivoted into the closing position and back in the parking position.

The pushing unit and the closing unit CU are in Fig. 1 in the parking position. The pusher plate PI.PU of the pushing unit PU can be moved in a horizontal or sloping downwards direction and in the opposite horizontal or sloping upwards direction. The closure plate PI.CU of the closing unit CU can be moved in a further horizontal direction and in the opposite direction or can be pivoted into the closing position and pivoted back into the parking position. All horizontal directions lie in the drawing plane of Fig. 1.

In the embodiment the closure plate PI.CU of the closing unit CU is mounted on a shaft Sh.CU. The shaft Sh.CU can pivot the closure plate PI.CU around a pivoting axis being perpendicular to the drawing plane of Fig.1 and being perpendicular to the travelling direction TD. A drive Dr.CU can rotate the shaft Sh.CU in both directions.

Fig. 1 further shows a drive for the pushing unit and the drive Dr.CU for the shaft Sh.CU of the closing unit CU. The drive Dr.CU can pivot the closure plate PI.CU in both directions around a horizontal pivoting axis which is perpendicular to the travelling direction TD and to the drawing plane of Fig.1.

The drive for the pushing unit comprises at least one driven toothed wheel (sprocket wheel) TW.PU engaging corresponding teeth mounted in the lower surface of the pusher plate PI.PU of the pushing unit. In one embodiment the toothed wheel TW.PU of the pushing unit drive can move the pusher plate PI.PU of the pushing unit in both directions, i.e. into the engaging position as well as into the parking position.

In a further embodiment the pusher plate PI.PU is connected with a helical spring Sp.PU which tends to extend. The spring Sp.PU is connected with the baler's frame. Seen in the travelling direction TD the rear end of the spring Sp.PU tends to be shifted rearwards. The extending spring Sp.PU urges the pusher plate PI.PU of the pushing unit in the engaging direction ED (in Fig. 1 to the right). The pusher plate PI.PU of the pushing unit can be locked in the parking position. A locking element pivotally mounted at the frame of the baler engages into a corresponding aperture in the pusher plate PI.PU. The toothed wheel TW.PU of the drive moves the pusher plate PI.PU of the pushing unit in the disengaging direction against the force of the spring Sp.PU until the pushing unit is locked in the parking position. For moving the pusher plate PI.PU of the pushing unit in the engaging direction ED the pushing unit is unlocked. Unlocking is performed by pivoting the locking element out of the aperture. The spring Sp.PU urges the pusher plate PI.PU of the pushing unit rapidly into the engaging direction ED. Fig. 1 shows the toothed wheel TW.PU and the spring Sp.PU.

In yet a further embodiment the pusher plate PI.PU of the pushing unit is mounted on the free ends of two levers. The pusher plate PI.PU rigidly connects these two levers. The two levers are mounted on a shaft. The shaft can rotate around a horizontal rotating axis parallel to the bale's rotating axis and perpendicular to the travelling direction. A drive rotates the shaft or directly the two levers. This drive can also comprise a helical spring. The rotation of the levers moves the pusher plate PI.PU of the pushing unit in the engaging direction ED into the engaging position or in the disengaging direction into the parking position.

A further spring (not shown) may be provided for pivoting the closure plate PI.CU of the closing unit CU into the closing position.

The closure plate PI.CU of the closing unit CU can be rotated in both directions around a pivoting axis, namely the rotating axis of the shaft Sh.CU. This pivoting axis is perpendicular to the drawing plane of Fig. 1 and perpendicular to the engaging direction ED. In the situation shown in Fig. 1 the closing unit CU is in the parking position. The drive Dr.CU is adapted for rotating the closure plate PI.CU of the closing unit CU clockwise around this pivoting axis into the closing position. The plate of the closing unit CU is rigidly mounted on the shaft Sh.CU. The drive Dr.CU rotates the shaft Sh.CU together with the closure plate PI.CU around the pivoting axis.

Preferably the pusher plate PI.PU of the pushing unit has a width, i.e. a dimension perpendicular to the engaging direction, which is approximately as large as the width of the inlet N.1. Therefore the pusher plate PI.PU extends nearly along the entire width of the inlet N.1. The closure plate PI.CU of the closing unit CU also has a width as large as the inlet N.1.

The pusher plate PI.PU of the pushing unit has a free edge PLE which is the leading edge when the pushing unit PU is moved in the engaging direction ED towards the feeding conveying unit WU. The closure plate PI.CU of the closing unit CU has a free edge CLE which is the leading edge when the closing unit CU is pivoted into the closing position.

In one embodiment the leading edge PLE of the pusher plate PI.PU has several protrusions. Due to these protrusions the leading edge PLE can have the shape of a comb or a fork. This embodiment guarantees that the leading edge PLE grasps the wrapping material in particular in the case that the wrapping material WM is a net.

In a further, preferred embodiment the leading edge PLE of the pusher plate PI.PU has a smooth surface without protrusions. This embodiment reduces the risk that the leading edge PLE penetrates or otherwise damages the wrapping material WM. Such damage may in particular occur if a protrusion of the leading edge PLE hits wrapping material WM having the shape of a plastic sheet. In addition a smooth surface of the pusher plate does not tension the web of wrapping material.

In one embodiment the leading edge PLE of the pusher plate PI.PU has the shape of a plane rectangle. In a further embodiment the leading edge PLE has a convex shape. Two different embodiment of a convex shape are possible and can be combined. On the one hand the convex shape occurs seen in a viewing direction parallel to the pusher plate's plane and perpendicular to the engaging direction ED. This embodiment avoids that the pusher plate PI.PU has a sharp edge between the leading edge PI and the upper or the lower surface. Such a sharp edge might injure a human operator or damage the wrapping material WM. On the other hand a convex shape of the leading edge PLE may occur seen in a viewing direction perpendicular to the pusher plate's plane and perpendicular to the engaging direction ED. The central portion of the pusher plate PI.PU has a smaller distance to the inlet N.1 than the two lateral edged arranged besides the pusher plate PI.PU. The pusher plate PI.PU may have the shape of a human tongue. This embodiment helps to spread the wrapping material WM laterally to the left and to the right - seen in the engaging direction ED.

During the step of creating the bale B in the pressing chamber both units CU are in the parking position as shown in Fig. 1. The pulling rollers S.1, S.2 and the reel RL do not rotate. The web of wrapping material WM is clamped between the rollers S.1, S.2 and not moved. Debris rubbed off from the rotating bale B drops from above into the area Ar and onto the rotor FU and is conveyed back into the pressing chamber. This is a desired handling of the debris.

If the bale creation is terminated, a trigger signal is automatically generated. This trigger signal automatically triggers the execution of the following steps:
- The pulling rollers S.1, S.2 starts pulling off wrapping material WM from the reservoir RL. For this purpose the pulling rollers S.1, S.2 are set into rotation.
- The closure plate PI.CU of the closing unit CU is pivoted from the parking position towards the bale rotating axis and towards the feeding conveying unit WU into the closing position. The pivotal movement of the closure plate PI.CU of the closing unit CU prevents the wrapping material WM from dropping into the area Ar. In this closing position the distance between the closure plate PI.CU and the feeding conveying unit WU is smaller than in the parking position.
- Afterwards the pusher plate PI.PU of the pushing unit is moved in the engaging direction ED into the final engaging position.

Fig. 2 shows the closing unit CU in the closing position and the pusher plate PI.PU still in the parking position. The closure plate PI.CU of the closing unit CU touches the feeding conveying unit WU and closes entirely the area Ar. The leading edge CLE of the closure plate PI.CU is made of elastic material. The closure plate PI.CU of the closing unit CU comes below the leading portion LEA.

Fig. 2 shows a situation where the drive Dr.CU has pivoted the shaft Sh.CU and by this the closure plate PI.CU of the closing unit CU into the closing position. The leading edge CLE touches the rotating feeding conveyer unit WU, at least the protruding rips of the rotating feeding conveyer unit WU. Therefore the closing unit CU entirely closes the area Ar. The loose end area LEA cannot drop below the closing unit CU. The rotating feeding conveyer unit WU further continues to clean the inlet N.1 from debris.

Preferably the leading edge CLE of the closing unit CU is made of an elastic material, e.g. of rubber, such that a close contact between the feeding conveying unit WU and the leading edge CLE can be realized. The elastic leading edge CLE oscillates when touching the protrusions on the conveying surface. The leading edge CLE can also be shifted laterally away by the feeding conveying unit WU. The feeding conveying unit WU continues to rotate after being touched by the leading edge CLE.

In the embodiment shown in Fig. 2 the leading edge CLE of the closing unit CU reaches the feeding conveying unit WU and touches it before the leading portion LEA reaches the closing unit CU. The closure plate PI.CU of the closing unit CU reaches a position below the wrapping material WM before the increasing leading portion LEA reaches the closure plate PI.CU. Therefore the wrapping material WM drops onto the closure plate PI.CU from above and cannot be conveyed in a position where a part of the leading portion (loose end area LEA) of the wrapping material WM is below the closing unit CU. This inhibits the undesired event that the rotating rotor of the feeding unit FU grasps the wrapping material WM. These rotors are arranged below the closing unit CU and in the area Ar. As the closing unit CU entirely covers the area Ar, the leading portion LEA cannot drop into the area Ar. This protection occurs independently from the position of the leading portion LEA with respect to the inlet N.1 and independently from the position of the pusher plate PI.PU.

In the embodiment of Fig. 2 the closure plate PI.CU of the closing unit CU is moved such that it reaches the closing position before the leading edge of the wrapping material WM reaches the closing unit CU. The lower edge of the wrapping material WM has just reached the pusher plate PI.PU.

In one implementation a flexible leading edge of the closing unit CU touches the feeding conveying unit WU. In one implementation the closing unit CU reaches the closing position before the leading portion LEA reaches the closing unit CU. An essential feature of the embodiment of Fig. 2 is that the closing unit CU comes into a position below the wrapping material WM before the leading portion LEA reaches the upper surface of the closing unit CU. This arrangement has the effect that the closing unit CU blocks the downward path of the leading portion LEA and inhibits the leading portion LEA from dropping or being moved into the area Ar.

In a further implementation (not shown) the closing unit CU reaches its closing position after the increasing loose end area LEA reaches the space between the closing unit CU and the roller WU. In this further implementation first the closing unit CU hits and shifts the loose end area LEA. Afterwards the pusher plate PI.PU hits the loose end area LEA and forms the bulge.

After the closing unit CU has been pivoted into the closing position and the leading portion LEA of the wrapping material WM has reached the closing unit CU in the closing position, the pusher plate PI.PU of the pushing unit is moved laterally from the parking position into the engaging position. The drive of the pushing unit PU effects a quick movement of the pusher plate PI.PU in the engaging direction ED. Preferably the pusher plate PI.PU performs a purely translational movement. Preferably the embodiment mentioned above is implemented: The pusher plate PI.PU is released by pivoting the locking element out of the corresponding aperture. This spring Sp.PU extends and pushes the pusher plate PI.PU in the engaging direction ED.

The operations of the wrapping material supplying unit S.1, S.2 and of releasing the pusher plate PI.PU are synchronized such that the increasing loose end area LEA comes in a position between the inlet N.1 and the pusher plate PI.PU. The moved plate PI.PU of the pushing unit PU hits the wrapping material WM such that a foremost part of the leading portion LEA of the wrapping material WM is below the pusher plate PI.PU and the rest of the web of wrapping material WM is above the pusher plate PI.PU of the pushing unit PU. Preferably the leading edge PLE of the pusher plate PI.PU hits the loose end area LEA such that the lower edge of the loose end area LEA is at least 20 cm below the leading edge PLE in the moment of hitting. By being hit the portion of the wrapping material WM being below the leading edge PLE is lifted - like a curtain before a window which is hit laterally. This causes the wrapping material WM to be shifted laterally towards the bale rotating axis and towards the feeding conveying unit WU. The term "shifting laterally" refers to the vertical direction of the sagging loose end area LEA.

The lateral movement of the pusher plate PI.PU has two different effects:
- The sagging loose end area LEA is shifted laterally.
- The inlet N.1 is cleaned by the pusher plate PI.PU such that no jam can occur.

The cleaning function of the pushing unit is achieved as the rigid pusher plate PI.PU pushes debris and other material towards the inlet N.1. Preferably the pusher plate PI.PU engages into the inlet N.1 during its movement in the engaging direction ED. This debris drops downwards or is pushed through the inlet N.1 into the pressing chamber and cannot inhibit the wrapping material WM from being injected through the inlet N.1 into the chamber. Preferably the width of the pusher plate PI.PU is as large as the width of the inlet N.1 such that the entire width of the inlet N.1 is cleaned. The pusher plate PI.PU urges the entire width of the wrapping material WM into the inlet and into the chamber.

In one embodiment the leading edge PLE of the pushing unit PU has a convex shape seen in a viewing direction perpendicular to the pusher plate's plane. The central part of the pusher plate PL.PU has a smaller distance to the inlet N.1 than the two lateral edges of the pusher plate PI.PU - like a human tongue. This embodiment urges the wrapping material WM to be shifted laterally with respect to the vertical sagging direction and in addition spreads it in both lateral directions with respect to the engaging direction ED. The term "shifting laterally" therefore can also refer to the engaging direction ED. Due to the convey shape of the pusher plate PI.PU the outer portions of the wrapping material WM are shifted to the left and to the right seen in the engaging direction ED. The effect is that along the entire width of the inlet N.1 wrapping material WM is inserted into the pressing chamber. The entire circumferential surface of the rotating bale B is wrapped and no area adjacent to a front face of the bale B remains unwrapped.

In a preferred embodiment the loose end area LEA is not tensioned until the wrapping material WM reaches the space between the rotating bale B and the rotating feeding roller WU. In particular the wrapping material WM is not tensioned after being hit by the pusher plate PI.PU but remains slack. Such a tension might stress the wrapping material WM. This embodiment with a slack loose end area LEA can in particular be implemented with a plane leading edge PLE of the pushing unit PU, i.e. a leading edge PLE without protrusions. Such protrusions can damage the wrapping material WM in particular if it has the form of a plastic sheet.

In order to avoid a tension between the leading edge PLE and the rollers S.1, S.2, the following parameters are set in a proper way:
- The circumferential velocity of the rollers S.1, S.2 is sufficiently large such that the leading portion LEA increases sufficiently enough. In one embodiment the velocity of the circumferential surface of the rollers S.1, S.2 is larger than the velocity of the linear movement of the pushing unit PU in the engaging direction ED.
- The pusher plate PI.PU hits the wrapping material WM so late that the loose end area LEA is sufficiently long enough. In particular the portion of the loose end area LEA between the rollers S.1, S.2 and the leading edge PLE is sufficiently long such that it is not tensioned by the moved pusher plate PI.PU even when the pusher plate PI.PU reaches its final engaging position.

This embodiment in which a tension of the loose end area LEA is avoided can be combined with an embodiment in which the leading edge PLE has no protrusions and has a surface with a low friction coefficient. Therefore only a low friction between the pushing unit and the wrapping material WM occurs. This embodiment further reduces the risk that the wrapping material WM is damaged during the step of inserting it into the chamber.

Fig. 3 shows the preferred embodiment of the operation of the pushing unit PU. The basic idea of the embodiment shown in Fig. 3 is that the pushing unit PU forms a bulge Bu in the slack and sagging loose end area LEA and pushes this bulge Bu and not only one layer of wrapping material into the inlet N.1.

The pusher plate PI.PU of the pushing unit is not necessarily moved horizontally but moved such that the engaging direction ED is perpendicular to the nip N.1 and to the surface of the rotating bale B. In the embodiment the engaging direction ED is therefore sloping downwards. The leading edge PLE of the pushing unit penetrates the inlet N.1. In one embodiment the leading edge PLE nearly touches the surface of the rotating bale B when having reached the final engaging position. This embodiment further reduces the risk that debris in the inlet N.1 forms an obstacle for inserting the wrapping material WM through the inlet N.1 into the pressing chamber. The rigid plate PI.PU cleans the entire inlet N.1 by pushing debris into the pressing chamber. This debris was collected in the inlet N.1. The closure plate PI.CU of the closing unit CU is also in this embodiment parallel to the pusher plate PI.PU when being in the closing position.

The feeding apparatus of this embodiment operates as follows: First the closing unit CU is pivoted into the closing position. The leading edge of the loose end area LEA touches the upper surface of the closure plate PI.CU, cf. the embodiment of Fig. 2. The closing unit CU inhibits the loose end area LEA from dropping into the area Ar.

Afterwards the pusher plate PI.PU is released. The spring Sp.PU moves the pusher plate PI.PU of the pushing unit PU in the engaging direction ED sloping downwards and into the nip N.1. The loose end area LEA has a lower edge. The sagging loose end area LEA is not tensioned but is slack. The pusher plate PI.PU hits the loose end area LEA in a position above the lower edge. Preferably the pusher plate PI.PU hits the loose end area LEA such that a distance of at least 20 cm between the lower edge and the leading edge PLE occurs. The laterally moved plate PI.PU forms a bulge Bu into the loose end area LEA of the wrapping material WM. One portion of the loose end area LEA is above the pusher plate PI.PU and one portion below.

The pusher plate PI.PU is further moved in the engaging direction ED until it reaches its final engaging position. Therefore the formed bulge Bu is pushed into the inlet N.1. In one embodiment the pusher plate PI.PU urges a top area of the bulge Bu against the rotating bale B when having reached the engaging position. This top area is pressed against the surface of the bale B.

Fig. 4 shows a situation shortly after the bulge Bu is at least partially inserted into the chamber. The bulge Bu comprises two layers of wrapping material WM. Two layers 2L of the wrapping material WM are therefore pulled from the pusher plate PI.PU and are simultaneously injected through the inlet N.1 into the space between the rotating feeding conveying unit WU and the rotating bale B. These two layers 2L are simultaneously grasped by the rotating bale B and a counter-element at a chamber wall. The bale B does not grasp the lower edge of the wrapping material WM but two layers 2L of an intermediate portion of the loose end area LEA. This embodiment even increases the probability that the wrapping material WM is grasped by the rotating bale B. In the situation shown in Fig. 4 the lower edge of the loose end area LEA is still outside of the pressing chamber.

Fig. 5 shows a situation where one layer of wrapping material WM is already placed around the rotating bale B. The two overlapping layers 2L stemming from the bulge Bu are also wrapped around the bale B. An intermediate tension area TA of the wrapping material WM occurs and extends between the rollers S.1, S.2 and the feeding supplying unit WU. The bale B and the feeding conveying unit WU on the one side and the two rollers S.1, S.2 on the other side provide a tension for the intermediate area TA of the wrapping material WM which serves as a tension area. The rollers S.1, S.2 are no longer driven by a drive but are driven by the wrapping material WM. Preferably a disk break decelerates at least one pulling roller S.1, S.2 against the force of the conveyed web of wrapping material WM. The decelerated rollers S.1, S.2 urge a retaining force onto the web of wrapping material WM which tensions the wrapping material WM. In the embodiment the wrapping material WM is tensioned after having being inserted into the pressing chamber but is not tensioned earlier. The tension guaranties that the rotating bale B is wrapped without wrinkles. The tension further guaranties that wrapping material WM does not come in a position below the closure plate PI.CU of the closing unit CU.

The rollers S.1, S.2 provide a retaining mechanical resistance. The wrapping material WM is pulled off against this resistance. The resistance yields the effect that the wrapping material WM is tensioned in the tension area TA. In particular the tension inhibits that the wrapping material WM can drop into the area Ar after the closing unit CU and the pushing unit are retracted into the parking position.

In the situation shown in Fig. 5 one entire layer of wrapping material WM is placed around the bale B. The area Ar needs not to be covered longer. Therefore the drive Dr.CU has retracted the closing unit CU from the closing position by pivoting it into the parking position. The rotated toothed wheel TW.PU has just retracting the pushing unit in a disengaging direction against the force of the spring Sp.PU. Therefore the pusher plate PI.PU is moved back from the final engaging position into the parking position. The pushing unit and the closing unit CU are in the parking position.

By retracting the closure plate PI.CU of the closing unit CU and the pusher plate PI.PU of the pushing unit the area Ar is released again. The retraction of the closing unit CU is performed because material rubbed off from the bale B can drop onto the feeding unit FU and is conveyed back into the pressing chamber or drops onto the ground. The retraction of the pusher plate PI.PU of the pushing unit is performed such that the pushing unit PU can be moved again in the engaging direction ED and can form a further bulge into the wrapping material WM while a further bale in the chamber is wrapped.

In one embodiment the upper surface of the pusher plate PI.PU of the pushing unit is cleaned during the step of retracting this pusher plate PI.PU into the respective parking position. Fig. 5 shows a cleaning element CI.PU for the pushing unit which cleans the upper surface of the pusher plate PI.PU while the pusher plate PI.PU is retracted. In one embodiment this cleaning element CI.PU comprises a brush. The cleaning element CI.PU can be moved vertically or angularly downwards into a cleaning position and in the opposite direction into a parking position. It is possible but not necessary to move the cleaning element CI.PU horizontally.

Reference signs used in the claims will do not limit the scope of the claimed invention. The term "comprises" does not exclude other elements or steps. The articles "a", "an", and "one" do not exclude a plurality of elements.

**LIST OF REFERENCE SIGNS**

| | |
|---|---|
| 2L | two layers of wrapping material WM inserted through the inlet N.1 into the baling chamber after the bulge Bu is formed |
| Ar | area besides the feeding conveying unit WU into which the wrapping material WM must not drop |
| B | rotating bale to be wrapped with wrapping material WM |
| Bu | bulge formed by the pusher plate PI.PU in the loose end area LEA |
| CLE | leading edge of the closing unit CU |
| CI.PU | cleaning element (brush) for the pushing unit PU |
| CR.1, CR.2 | conveying rollers (starter rollers), rotate the bale B |
| CS | conveying surface of the conveying unit WU, has ribs |
| CU | closing unit, comprises the closure plate PI.CU and the drive Dr.CU |
| Dr.CU | drive for the closing unit CU |
| ED | engaging direction of the pushing unit PU |
| FU | feeding unit with several rotating rotors |
| IRo | idler roller besides the inlet N.1, deflects the pressing belt PB |
| LEA | loose end area of the slack wrapping material WM, sags freely down |
| N.1 | nip between the feeding conveying unit WU and the idler roller IRo, serves as an inlet for the wrapping material WM. |
| PB | pressing belt, is guided around the driven roller DRo and several idler rollers, among them the idler roller IRo. |
| PLE | leading edge of the pushing unit PU |
| PI.CU | closure plate of the closing unit CU |
| PI.PU | pusher plate of the pushing unit PU |
| PU | pushing unit, comprises the pusher plate PI.PU, the spring Sp.PU, and the drive toothed wheel TW.PU |
| PUU | pick-up unit |
| RL | reel of wrapping material WM, operates as a reservoir |
| S.1, S.2 | driven rollers of the wrapping material supplying unit, clamp and pull wrapping material WM from the reel RL |
| Sh.CU | shaft on which the closure plate PI.CU of the closing unit CU is mounted, can be rotated around its longitudinal axis by the drive Dr.CU |
| Sp.PU | spring of the drive for the pushing unit PU, shifts the pusher plate PI.PU rapidly into the engaging direction ED |
| TA | intermediate tension area in which the wrapping material WM is tensioned, extends between the wrapping material supply rollers S.1, S.2 and the inlet N.1 |
| TD | travelling direction of the baler |
| TW.PU | toothed wheel of the drive for the pushing unit PU, shifts the pusher plate PI.PU into the disengaging direction opposite to the engaging direction ED against the force of the spring Sp.PU |
| WM | wrapping material for wrapping the rotating bale B |
| WU | feeding conveying unit in the form of a roller, conveys the wrapping material WM towards the inlet N.1 by means of the conveying surface CS |

## Claims

1. Feeding apparatus for feeding wrapping material (WM) into an inlet (N.1) of a chamber in which chamber an object (B) is to be wrapped with wrapping material (WM),
the feeding apparatus comprises
• a wrapping material supplying unit (S.1, S.2),
• a unit comprising a plate (PI.PU),
• a unit drive (Sp.PU) for moving the plate (PI.PU),
the wrapping material supplying unit (S.1, S.2) can be operated in a supplying mode, the wrapping material supplying unit (S.1, S.2) operated in the supplying mode is arranged for supplying wrapping material (WM) from a reservoir (RL) such that
• a leading portion of the wrapping material (WM) forms a sagging and slack loose end area (LEA) with a lower edge and
• the loose end area (LEA) increases until the wrapping material (WM) reaches the chamber,
the plate (PI.PU) is arranged such that it can be moved in an engaging direction (ED) towards the inlet (N.1) until the plate (PI.PU) reaches a final engaging position,
the unit drive (Sp.PU) is adapted for moving the plate (PI.PU) in the engaging direction (ED) into the final engaging position, and
the feeding apparatus is arranged such that the loose end area (LEA) supplied by the wrapping material supplying unit (S.1, S.2) comes in a position between the plate (PI.PU) and the inlet (N.1),
**characterized in that**
the unit is a pushing unit and the moveable plate is a pusher plate (PI.PU),
the feeding apparatus is adapted for moving the pusher plate (PI.PU) in the engaging direction (ED) such that
• the moved pusher plate (PI.PU) hits laterally the sagging loose end area (LEA) above the lower edge of the loose end area (LEA) before the pusher plate (PI.PU) reaches its final engaging position and
• the kinetic energy implied on the slack loose end area (LEA) by the further movement of the pusher plate (PI.PU) in the engaging direction (ED) towards the inlet (N.1) and the inertia of the sagging loose end area (LEA) form a bulge (Bu) in the loose end area (LEA), and
• the pushing movement of the pusher plate (PI.PU) shifts the formed bulge (Bu) towards the inlet (N.1) and inserts this bulge (Bu) into the inlet (N.1)
• such that a portion of wrapping material (WM) with two overlapping layers (2L) is inserted into the inlet (N.1).

2. Feeding apparatus according to claim 1,
**characterized in that**
the feeding apparatus is arranged such that
the pusher plate (PI.PU) of the pushing unit engages into the inlet (N.1) when the pusher plate (PI.PU) is in the final engaging position.

3. Feeding apparatus according to one of the preceding claims,
**characterized in that**
the feeding apparatus is arranged such that
moving the pusher plate (PI.PU) of the pushing unit into the final engaging position
urges the bulge (Bu) against the surface of an object (B) in the chamber.

4. Feeding apparatus according to one of the preceding claims,
**characterized in that**
the feeding apparatus is arranged for moving the pusher plate (PI.PU) in the engaging direction (ED)
with a purely linear and thereby translational movement.

5. Feeding apparatus according to one of the preceding claims,
**characterized in that**
the feeding apparatus is arranged for moving the pusher plate (PI.PU) in the engaging direction (ED)
by rotating it around a rotating axis which is perpendicular to the engaging direction (ED).

6. Feeding apparatus according to one of the preceding claims,
**characterized in that**
the inlet (N.1) extends in a plane,
the feeding apparatus is arranged such that
the engaging direction (ED) in which the pusher plate (PI.PU) of the pushing unit (PU) is moved
is perpendicular to the plane of the inlet (N.1).

7. Feeding apparatus according to one of the preceding claims,
**characterized in that**
the feeding apparatus is arranged such that
the sagging loose end area (LEA) remains slack and is thereby not tensioned until the wrapping material (WM) has reached the chamber.

8. Feeding apparatus according to claim 7,
**characterized in that**
the feeding apparatus is arranged such that
• the wrapping material supplying unit (S.1, S.2) supplies the wrapping material (WM) such that the loose end area (LEA) increases with a supplying velocity,
• the drive (Sp.PU) moves the pusher plate (PI.PU) in the engaging direction (ED) with a pushing velocity, and
• the supplying velocity is larger than the pushing velocity.

9. Feeding apparatus according to one of the preceding claims,
**characterized in that**
the pusher plate (PI.PU) has a width, i.e. a dimension perpendicular to the engaging direction (ED),
which is approximately as large as the width of the inlet (N.1).

10. Feeding apparatus according to one of the preceding claims,
**characterized in that**
the feeding apparatus further comprises a closing unit (CU) arranged below the pusher plate (PI.PU) of the pushing unit
the closing unit (CU) can be operated in a closing position, and
the closing unit (CU) operated in the closing position inhibits the loose end are (LEA) from dropping into an area (Ar) below the closing unit (CU).

11. Feeding apparatus according to claim 10,
**characterized in that**
the feeding apparatus is arranged such that the loose end area (LEA) drops onto the closing unit (CU) being operated in the closing position
before the pusher plate (PI.PU) of the pushing unit hits laterally the loose end area (LEA).

12. Feeding apparatus according to claim 10 or to claim 11,
**characterized in that**
the closing unit (CU) is pivotally mounted such that it can be pivoted into the closing position and into a parking position,
the closing unit (CU) in the parking position releases the area (Ar), and
the feeding apparatus comprises a closing unit drive (Dr.CU) for pivoting the closing unit (CU).

13. Feeding apparatus according to one of the preceding claims,
**characterized in that**
the feeding apparatus comprises a guiding element,
the guiding element
• is arranged below the pusher plate (PI.PU) of the pushing unit and
• is arranged for guiding the wrapping material (WM) towards the inlet (N.1).

14. Feeding apparatus according to one of the preceding claims,
**characterized in that**
the pusher plate (PI.PU)
• extends in a plane and
• has a free edge (PLE) and two lateral edges,
where the free edge (PLE) is the leading edge when the pusher plate (PI.PU) is moved in the engaging direction (ED) and
the leading edge (PLE) has a convex shape seen in a viewing direction perpendicular to the plane of the pusher plate (PI.PU)
such that a central portion of the leading edge (PLE) has a smaller distance to the inlet (N.1) than
the two lateral edges of the pusher plate (PI.PU) besides this central portion.

15. Wrapping arrangement for wrapping an object (B) with wrapping material (WM),
the wrapping arrangement comprises
• a chamber adapted for containing an object (B) to be wrapped,
• an inlet (N.1) through which wrapping material (WM) can be inserted into the chamber,
• a rotating means for rotating an object (B) in the chamber, and
• a feeding apparatus according to one of the preceding claims for inserting wrapping material (WM) into the inlet (N.1),
the wrapping arrangement is adapted such that the rotating object (B) in the chamber grasps the two layers (2L) of the wrapping material (WM) which are inserted into the inlet (N.1).

16. Method for feeding wrapping material (WM) towards an inlet (N.1) of a chamber,
in which chamber an object (B) is to be wrapped with wrapping material (WM),
the method comprises the automatically performed steps that
a plate (PI.PU) of a unit is moved in an engaging direction (ED) towards the inlet (N.1)
until the plate (PI.PU) reaches a final engaging position,
wrapping material (WM) is supplied from a reservoir (RL) such that
• a leading portion of the wrapping material (WM) forms a sagging and slack loose end area (LEA) with a lower edge,
• the loose end area (LEA) comes into a position between the plate (PI.PU) and the inlet (N.1) before the plate (PI.PU) reaches the final engaging position, and
• the sagging loose end area (LEA) increases until the wrapping material (WM) reaches the chamber, and
• the plate (PI.PU) hits laterally the sagging loose end area (LEA) above the lower edge of the loose end area (LEA) while the plate (PI.PU) is moved in the engaging direction (ED) and before the plate (PI.PU) reaches its final engaging position,
**characterized in that**
the unit is a pushing unit and the moved plate is a pusher plate (PI.PU) and
the method further comprises the steps that
• the pusher plate (PI.PU) hits laterally the sagging loose end area (LEA) above the lower edge of the loose end area (LEA) while the pusher plate (PI.PU) is moved in the engaging direction (ED) and before the pusher plate (PI.PU) reaches its final engaging position and
• the further movement of the pusher plate (PI.PU) in the engaging direction (ED) urges kinematic energy in a lateral direction onto the slack loose end area (LEA),
• the urged kinematic energy and the inertia of the slack loose end area (LEA) form a bulge (Bu) in the loose end area (LEA),
• the further movement of the pusher plate (PI.PU) shifts the formed bulge (Bu) towards the inlet (N.1) and
• this bulge (Bu) to be inserted into the inlet (N.1) such that a portion of wrapping material (WM) with two overlapping layers (2L) is inserted into the inlet (N.1).

17. Method according to claim 16,
**characterized in that**
the step of moving the pusher plate (PI.PU) into the final engaging position comprises the step that
the pusher plate (PI.PU) is moved into the final engaging position such that the pusher plate (PI.PU)
• engages into the inlet (N.1) and
• urges a top area of the bulge (Bu) against the surface of the object (B) in the chamber.

18. Method according to claim 16 or claim 17,
**characterized in that**
the steps
• of supplying wrapping material (WM) from the reservoir (RL) and
• of shifting the bulge (Bu) towards the inlet (N.1)
are performed such that the loose end area (LEA) remains slack until the wrapping material (WM) reaches the inlet (N.1).

19. Method according to one of the claims 16 to 18,
**characterized in that**
a closing unit (CU) is pivoted into a closing position and
the sagging loose end area (LEA) drops onto the closing unit (CU) in the closing position before the moved plate (PI.PU) hits laterally the loose end area (LEA).

20. Method for wrapping an object (B) in a chamber with wrapping material (WM),
the method comprises the steps that
• the object (B) in the chamber is rotated,
• two layers (2L) of the wrapping material (WM) are inserted into an inlet (N.1) of the chamber by applying a method according to one of the claims 16 to 18, and
• the rotating object (B) grasps the two layers (2L) of the wrapping material (WM) which are inserted into the inlet (N.1).

## Patentansprüche

1. Zuführvorrichtung zum Zuführen von Einwickelmaterial (WM) in einen Einlass (N.1) einer Kammer, in der ein Objekt (B) mit Einwickelmaterial (WM) eingewickelt werden soll, wobei die Zuführvorrichtung Folgendes aufweist:
• eine Einwickelmaterial-Bereitstellungseinheit (S.1, S.2),
• eine Einheit, die eine Platte (PI.PU) aufweist,
• einen Einheit-Antrieb (Sp.PU) zum Bewegen der Platte (PI.PU),
wobei die Einwickelmaterial-Bereitstellungseinheit (S.1, S.2) in einem Bereitstellungsmodus betrieben werden kann,
wobei die in dem Bereitstellungsmodus betriebene Einwickelmaterial-Bereitstellungseinheit (S.1, S.3) dazu angeordnet ist, Einwickelmaterial (WM) aus einem Reservoir (RL) bereitzustellen, sodass
• ein Führungsabschnitt des Einwickelmaterials (WM) einen durchhängenden und schlaffen losen Endbereich (LEA) mit einer Unterkante bildet und
• der lose Endbereich (LEA) zunimmt, bis das Einwickelmaterial (WM) die Kammer erreicht,
wobei die Platte (PI.PU) so angeordnet ist, dass sie in einer Eingriffsrichtung (ED) in Richtung auf den Einlass (N.1) bewegt werden kann, bis die Platte (PI.PU) eine endgültige Eingriffsposition erreicht,
wobei der Einheit-Antrieb (Sp.PU) dazu angepasst ist, die Platte (PI.PU) in der Eingriffsrichtung (ED) in die endgültige Eingriffsposition zu bewegen, und
wobei die Zuführvorrichtung so angeordnet ist, dass der durch die Einwickelmaterial-Bereitstellungseinheit (S.1, S.2) bereitgestellte lose Endbereich (LEA) in eine Position zwischen der Platte (PI.PU) und dem Einlass (N.1) gelangt, **dadurch gekennzeichnet, dass** die Einheit eine Schiebeeinheit und die bewegliche Platte eine Schiebeplatte (PI.PU) ist,
die Zuführvorrichtung dazu angepasst ist, die Schiebeplatte (PI.PU) in der Eingriffsrichtung (ED) zu bewegen, so dass
• die bewegte Schiebeplatte (PI.PU) den durchhängenden losen Endbereich (LEA) seitlich oberhalb der Unterkante des losen Endbereichs (LEA) trifft, bevor die Schiebeplatte (PI.PU) ihre endgültige Eingriffsposition erreicht, und
• die auf den schlaffen losen Endbereich (LEA) durch die weitere Bewegung der Schiebeplatte (PI.PU) in der Eingriffsrichtung (ED) in Richtung auf den Einlass (N.1) bewirkte kinetische Energie und die Trägheit des durchhängenden losen Endbereichs (LEA) eine Ausbuchtung (Bu) in dem losen Endbereich (LEA) formen und
• die Schiebebewegung der Schiebeplatte (PI.PU) die geformte Ausbuchtung (Bu) in Richtung auf den Einlass (N.1) verschiebt und diese Ausbuchtung (Bu) in den Einlass (N.1) einführt,
• sodass ein Teil des Einwickelmaterials (WM) mit zwei überlappenden Lagen (2L) in den Einlass (N.1) eingeführt wird.

2. Zuführvorrichtung nach Anspruch 1, **dadurch gekennzeichnet, dass** die Zuführvorrichtung so angeordnet ist, dass
die Schiebeplatte (PI.PU) der Schiebeeinheit in den Einlass (N.1) eingreift,
wenn sich die Schiebeplatte (PI.PU) in der endgültigen Eingriffsposition befindet.

3. Zuführvorrichtung nach einem der vorhergehenden Ansprüche, **dadurch gekennzeichnet, dass** die Zuführvorrichtung so angeordnet ist, dass
ein Bewegen der Schiebeplatte (PI.PU) der Schiebeeinheit in die endgültige Eingriffsposition die Ausbuchtung (Bu) gegen die Oberfläche eines Objekts (B) in der Kammer zwingt.

4. Zuführvorrichtung nach einem der vorhergehenden Ansprüche, **dadurch gekennzeichnet, dass** die Zuführvorrichtung dazu angeordnet ist, mit einer ausschließlich linearen Bewegung und daher einer Translationsbewegung die Schiebeplatte (PI.PU) in der Eingriffsrichtung (ED) zu bewegen.

5. Zuführvorrichtung nach einem der vorhergehenden Ansprüche, **dadurch gekennzeichnet, dass** die Zuführeinrichtung dazu angeordnet ist, die Schiebeplatte (PI.PU) in der Einlassrichtung (ED) zu bewegen, indem sie sie um eine Rotationsachse rotiert, die senkrecht zu der Eingriffsrichtung (ED) verläuft.

6. Zuführvorrichtung nach einem der vorhergehenden Ansprüche, **dadurch gekennzeichnet, dass**
sich der Einlass (N1) in einer Ebene erstreckt,
die Zuführvorrichtung so angeordnet ist, dass
die Eingriffsrichtung (ED), in der die Schiebeplatte (PI.PU) der Schiebeeinheit (P) bewegt wird, senkrecht zu der Ebene des Einlasses (N.1) verläuft.

7. Zuführvorrichtung nach einem der vorhergehenden Ansprüche, **dadurch gekennzeichnet, dass** die Zuführvorrichtung so angeordnet ist, dass der durchhängende lose Endbereich (LEA) schlaff bleibt und daher nicht gespannt wird, bevor das Einwickelmaterial (WM) die Kammer erreicht hat.

8. Zuführvorrichtung nach Anspruch 7, **dadurch gekennzeichnet, dass** die Zuführvorrichtung so angeordnet ist, dass
• die Einwickelmaterial-Bereitstellungseinheit (S.1, S.2) das Einwickelmaterial (WM) so bereitstellt, dass der lose Endbereich (LEA) mit einer Bereitstellungsgeschwindigkeit zunimmt,
• der Antrieb (Sp.PU) die Schiebeplatte (PI.PU) mit einer Schiebegeschwindigkeit in der Eingriffsrichtung (ED) bewegt und
• die Bereitstellungsgeschwindigkeit größer ist als die Schiebegeschwindigkeit.

9. Zuführvorrichtung nach einem der vorhergehenden Ansprüche, **dadurch gekennzeichnet, dass** die Schiebeplatte (PI.PU) eine Breite besitzt, d. h. eine Abmessung senkrecht zu der Eingriffsrichtung (ED), die ungefähr so groß ist wie die Breite des Einlasses (N.1).

10. Zuführvorrichtung nach einem der vorhergehenden Ansprüche, **dadurch gekennzeichnet, dass**
die Zuführvorrichtung weiterhin eine Schließeinheit (CU) aufweist, die unterhalb der Schiebeplatte (PI.PU) der Schiebeeinheit angeordnet ist,
die Schließeinheit (CU) in einer geschlossenen Position betrieben werden kann und
die Schließeinheit (CU), wenn sie in der geschlossenen Position betrieben wird, den losen Endbereich (LEA) daran hindert, in einen Bereich (Ar) unterhalb der Schließeinheit (CU) zu fallen.

11. Zuführvorrichtung nach Anspruch 10, **dadurch gekennzeichnet, dass** die Zuführvorrichtung so angeordnet ist, dass der lose Endbereich (LEA) auf die in der Schließposition betriebene Schließeinheit (CU) fällt, bevor die Schiebeplatte (PI.PU) der Schiebeeinheit seitlich den losen Endbereich (LEA) trifft.

12. Zuführvorrichtung nach Anspruch 10 oder Anspruch 11, **dadurch gekennzeichnet, dass** die Schließeinheit (CU) schwenkbar montiert ist, sodass sie in die Schließposition und in eine Parkposition verschwenkt werden kann,
die Schließeinheit (CU) in der Parkposition den Bereich (Ar) freigibt,
die Zuführvorrichtung einen Schließeinheitsantrieb (Dr.CU) zum Verschwenken der Schließeinheit (CU) aufweist.

13. Zuführvorrichtung nach einem der vorhergehenden Ansprüche, **dadurch gekennzeichnet, dass** die Zuführvorrichtung ein Führungselement aufweist, wobei das Führungselement
• unterhalb der Schiebeplatte (PI.PU) der Schiebeeinheit angeordnet ist und
• dazu angeordnet ist, das Einwickelmaterial (WM) in Richtung auf den Einlass (N.1) zu führen.

14. Zuführvorrichtung nach einem der vorhergehenden Ansprüche, **dadurch gekennzeichnet, dass** die Schiebeplatte (PI.PU)
• sich in einer Ebene erstreckt und
• eine freie Kante (PLE) und zwei Seitenkanten besitzt,
wobei die freie Kante (PLE) die Führungskante ist, wenn die Schiebeplatte (PI.PU) in der Eingriffsrichtung (ED) bewegt wird, und
die Führungskarte (PLE) gesehen in einer Blickrichtung senkrecht zu der Ebene der Schiebeplatte (PI.PU) eine konvexe Form besitzt,
sodass ein Zentralbereich der Führungskanten (PLE) einen kleineren Abstand zu dem Einlass (N.1) hat als die beiden Seitenkanten der Schiebeplatte (PI.PU) neben diesem Zentralbereich.

15. Einwickelanordnung zum Einwickeln eines Objekts (B) mit Einwickelmaterial (WM), wobei die Einwickelanordnung Folgendes aufweist:
• eine Kammer, die dazu angepasst ist, ein einzuwickelndes Objekt (B) zu enthalten,
• einen Einlass (N.1), durch den Einwickelmaterial (WM) in die Kammer eingebracht werden kann,
• ein Rotiermittel zum Rotieren eines Objekts (B) in der Kammer und
• eine Zuführvorrichtung nach einem der vorhergehenden Ansprüche zum Einführen von Einwickelmaterial (WM) in den Einlass (N.1),
wobei die Einwickelvorrichtung so angepasst ist, dass das rotierende Objekt (B) in der Kammer die beiden Lagen (2L) des Einwickelmaterials (WM) ergreift, die in den Einlass (N.1) eingeführt werden.

16. Verfahren zum Zuführen von Einwickelmaterial (WM) zu einem Einlass (N.1) einer Kammer, in der ein Objekt (B) mit Einwickelmaterial (WM) eingewickelt werden soll, wobei das Verfahren die automatisch ausgeführten Schritte aufweist, dass
eine Platte (PI.PU) einer Einheit in einer Eingriffsrichtung (ED) in Richtung auf den Einlass (N.1) bewegt wird, bis die Platte (PI.PU) eine endgültige Eingriffsposition erreicht,
Einwickelmaterial (WM) von einem Reservoir (RL) zugeführt wird, sodass
• ein Führungsabschnitt des Einwickelmaterials (WM) einen durchhängenden und schlaffen losen Endbereich (LEA) mit einer Unterkante bildet,
• der lose Endbereich (LEA) in eine Position zwischen der Platte (PI.PU) und dem Einlass (N.1) gelangt, bevor die Platte (PI.PU) die endgültige Eingriffsposition erreicht, und
• der durchhängende lose Endbereich (LEA) zunimmt, bis das Einwickelmaterial (WM) die Kammer erreicht, und
• die Platte (PI.PU) seitlich den durchhängenden losen Endbereich (LEA) oberhalb der Unterkante des losen Endbereichs (LEA) trifft, während die Platte (PI.PU) in der Eingriffsrichtung (ED) bewegt wird und bevor die Platte (PI.PU) ihre endgültige Eingriffsposition erreicht, **dadurch gekennzeichnet, dass**
die Einheit eine Schiebeeinheit ist und die bewegte Platte eine Schiebeplatte (PI.PU) ist und das Verfahren weiterhin die folgenden Schritte aufweist:
• die Schiebeplatte (PI.PU) trifft seitlich den durchhängenden losen Endbereich (LEA) oberhalb der Unterkante des losen Endbereichs (LEA), während die Schiebeplatte (PI.PU) in die Eingriffsposition (ED) bewegt wird und bevor die Schiebeplatte (PI.PU) ihre endgültige Eingriffsposition erreicht, und
• die weitere Bewegung der Schiebeplatte (PI.PU) in der Eingriffsrichtung (ED) zwingt dem schlaffen losen Endbereich (LEA) kinetische Energie in eine seitliche Richtung auf,
• die aufgezwungene kinematischen Energie und die Trägheit des schlaffen losen Endbereichs (LEA) bilden eine Ausbuchtung (Bu) in dem losen Endbereich (LEA) aus,
• die weitere Bewegung der Schiebeplatte (PI.PU) verlagert die gebildete Ausbuchtung (Bu) in Richtung auf den Einlass (N.1) und
• verlagert diese in den Einlass (N.1) einzuführende Ausbuchtung (Bu) so, dass ein Teil von Einwickelmaterial (WM) mit zwei überlappenden Lagen (2L) in den Einlass (N.1) eingeführt wird.

17. Verfahren nach Anspruch 16, **dadurch gekennzeichnet, dass** der Schritt des Bewegens der Schiebeplatte (PI.PU) in die endgültige Eingriffsposition den Schritt aufweist, dass die Schiebeplatte (PI.PU) in die endgültige Eingriffsposition bewegt wird,
sodass die Schiebeplatte (PI.PU)
• in den Einlass (N.1) eingreift und
• einen oberen Bereich der Ausbuchtung (Bu) gegen die Oberfläche des Objekts (B) in der Kammer zwingt.

18. Verfahren nach Anspruch 16 oder Anspruch 17, **dadurch gekennzeichnet, dass** die Schritte
• des Bereitstellens von Einwickelmaterial (WM) aus dem Reservoir (RL) und
• des Verlagerns der Ausbuchtung (Bu) in Richtung auf den Einlass (N.1) so ausgeführt werden, dass der lose Endbereich (LEA) schlaff bleibt, bis das Einwickelmaterial (WM) den Einlass (N.1) erreicht.

19. Verfahren nach einem der Ansprüche 16 bis 18, **dadurch gekennzeichnet, dass** eine Schließeinheit (CU) in eine Schließposition verschwenkt ist und
der durchhängende lose Endbereich (LEA) auf die Schließeinheit (CU) in der Schließposition fällt, bevor die bewegte Platte (PI.PU) seitlich den losen Endbereich (LEA) trifft.

20. Verfahren zum Einwickeln eines Objekts (B) in einer Kammer mit Einwickelmaterial (WM), wobei das Verfahren die folgenden Schritte aufweist:
• das Objekt (B) in der Kammer wird rotiert,
• zwei Lagen (2L) des Einwickelmaterials (WM) werden in einen Einlass (N.1) der Kammer eingeführt, indem ein Verfahren nach einem der Ansprüche 16 bis 18 angewandt wird, und
• das rotierende Objekt (B) ergreift die beiden Lagen (2L) des Einwickelmaterials (WM), die in den Einlass (N.1) eingeführt werden.

## Revendications

1. Appareil d'alimentation pour alimenter un matériau d'emballage (WM) dans une entrée (N.1) d'une chambre
chambre dans laquelle un objet (B) doit être emballé avec un matériau d'emballage (WM), l'appareil d'alimentation comprenant
- une unité d'approvisionnement d'un matériau d'emballage (S.1, S.2),
- une unité comprenant une plaque (PI.PU),
- une unité d'entraînement (Sp.PU) pour déplacer la plaque (PI.PU),
l'unité d'approvisionnement d'un matériau d'emballage (S.1, S.2) peut fonctionner en mode approvisionnement, l'unité d'approvisionnement d'un matériau d'emballage (S.1, S.2) fonctionnant en mode approvisionnement est agencée pour approvisionner un matériau d'emballage (WM) depuis un réservoir (RL) de sorte que
- une partie d'attaque du matériau d'emballage (WM) forme une zone terminale libre de relâchement et relâchée (LEA) avec un bord inférieur et
- la zone terminale libre (LEA) augmente jusqu'à ce que le matériau d'emballage (WM) atteigne la chambre,
la plaque (PI.PU) est agencée de sorte qu'elle puisse être déplacée dans une direction d'engagement (ED) vers l'entrée (N.1) jusqu'à ce que la plaque (PI.PU) atteigne une position d'engagement finale,
l'unité d'entraînement (Sp.PU) est conçue pour déplacer la plaque (PI.PU) dans la direction d'engagement (ED) dans la position d'engagement finale, et
l'appareil d'alimentation est agencé de sorte que la zone terminale libre (LEA) approvisionnée par l'unité d'approvisionnement d'un matériau d'emballage (S.1, S.2) entre dans une position entre la plaque (PI.PU) et l'entrée (N.1),
**caractérisé en ce que**
l'unité est une unité de poussée et la plaque mobile est une plaque de poussoir (PI.PU),
l'appareil d'alimentation est conçu pour déplacer la plaque de poussoir (PI.PU) dans la direction d'engagement (ED) de sorte que
- la plaque de poussoir déplacée (PI.PU) heurte latéralement la zone terminale libre de relâchement (LEA) au-dessus du bord inférieur de la zone terminale libre (LEA) avant que la plaque de poussoir (PI.PU) atteigne sa position d'engagement finale et
- l'énergie cinétique impliquée sur la zone terminale libre relâchée (LEA) par le mouvement supplémentaire de la plaque de poussoir (PI.PU) dans la direction d'engagement (ED) vers l'entrée (N.1) et l'inertie de la zone terminale libre de relâchement (LEA) forment un renflement (Bu) dans la zone terminale libre (LEA), et
- le mouvement de poussée de la plaque de poussoir (PI.PU) décale le renflement formé (Bu) vers l'entrée (N.1) et insère ce renflement (Bu) dans l'entrée (N.1)
- de sorte qu'une partie du matériau d'emballage (WM) avec deux couches se chevauchant (2L) soit insérée dans l'entrée (N.1).

2. Appareil d'alimentation selon la revendication 1,
**caractérisé en ce que**
l'appareil d'alimentation est agencé de sorte que la plaque de poussoir (PI.PU) de l'unité de poussée s'engage dans l'entrée (N.1) lorsque la plaque de poussoir (PI.PU) est dans la position d'engagement finale.

3. Appareil d'alimentation selon l'une des revendications précédentes,
**caractérisé en ce que**
l'appareil d'alimentation est agencé de sorte que le déplacement de la plaque de poussoir (PI.PU) de l'unité de poussée dans la position d'engagement finale presse le renflement (Bu) contre la surface d'un objet (B) dans la chambre.

4. Appareil d'alimentation selon l'une des revendications précédentes,
**caractérisé en ce que**
l'appareil d'alimentation est agencé pour déplacer la plaque de poussoir (PI.PU) dans la direction d'engagement (ED) avec un mouvement purement linéaire et ainsi de translation.

5. Appareil d'alimentation selon l'une des revendications précédentes,
**caractérisé en ce que**
l'appareil d'alimentation est agencé pour déplacer la plaque de poussoir (PI.PU) dans la direction d'engagement (ED) en le faisant tourner autour d'un axe de rotation qui est perpendiculaire à la direction d'engagement (ED).

6. Appareil d'alimentation selon l'une des revendications précédentes,
**caractérisé en ce que**
l'entrée (N.1) s'étant dans un plan,
l'appareil d'alimentation est agencé de sorte que la direction d'engagement (ED) dans laquelle la plaque de poussoir (PI.PU) de l'unité de poussée (PU) est déplacée soit perpendiculaire au plan de l'entrée (N.1).

7. Appareil d'alimentation selon l'une des revendications précédentes,
**caractérisé en ce que**
l'appareil d'alimentation est agencé de sorte que la zone terminale libre de relâchement (LEA) reste relâchée et ne soit ainsi pas sous tension jusqu'à ce que le matériau d'emballage (WM) ait atteint la chambre.

8. Appareil d'alimentation selon la revendication 7,
**caractérisé en ce que**
l'appareil d'alimentation est agencé de sorte que
- l'unité d'approvisionnement d'un matériau d'emballage (S.1, S.2) approvisionne le matériau d'emballage (WM) de sorte que la zone terminale libre (LEA) augmente avec la vitesse d'approvisionnement,
- l'entraînement (Sp.PU) délace la plaque de poussoir (PI.PU) dans la direction d'engagement (ED) avec une vitesse de poussée, et
- la vitesse d'approvisionnement est supérieure à la vitesse de poussée.

9. Appareil d'alimentation selon l'une des revendications précédentes,
**caractérisé en ce que**
la plaque de poussoir (PI.PU) a une largeur, à savoir une dimension perpendiculaire à la direction d'engagement (ED), qui est environ aussi importante que la largeur de l'entrée (N.1).

10. Appareil d'alimentation selon l'une des revendications précédentes,
**caractérisé en ce que**
l'appareil d'alimentation comprend en outre une unité de fermeture (CU) agencée en dessous de la plaque de poussoir (PI.PU) de l'unité de poussée ;
l'unité de fermeture (CU) peut fonctionner en position de fermeture, et
l'unité de fermeture (CU) fonctionnant dans la position de fermeture inhibe la tombée de la zone terminale libre (LEA) dans une zone (Ar) en dessous de l'unité de fermeture (CU).

11. Appareil d'alimentation selon la revendication
10, **caractérisé en ce que**
l'appareil d'alimentation est agencé de sorte que la zone terminale libre (LEA) tombe sur l'unité de fermeture (CU) qui fonctionne en position de fermeture avant que la plaque de poussoir (PI.PU) de l'unité de poussée heurte latéralement la zone terminale libre (LEA).

12. Appareil d'alimentation selon la revendication 10 ou la revendication 11,
**caractérisé en ce que**
l'unité de fermeture (CU) est montée de manière à pouvoir pivoter de sorte qu'elle puisse être pivotée dans la position de fermeture et dans une position d'attente,
l'unité de fermeture (CU) dans la position d'attente libère la zone (Ar), et
l'appareil d'alimentation comprend une unité d'entraînement de fermeture (Dr.CU) pour faire pivoter l'unité de fermeture (CU).

13. Appareil d'alimentation selon l'une des revendications précédentes,
**caractérisé en ce que**
l'appareil d'alimentation comprend un élément de guide,
l'élément de guide
- est agencé en dessous de la plaque de poussoir (PI.PU) de l'unité de poussée et
- est agencé pour guider le matériau d'emballage (WM) vers l'entrée (N.1).

14. Appareil d'alimentation selon l'une des revendications précédentes,
**caractérisé en ce que**
la plaque de poussoir (PI.PU)
- s'étend dans un plan et
- a un bord libre (PLE) et deux bords latéraux,
où le bord libre (PLE) est le bord d'attaque lorsque la plaque de poussoir (PI.PU) est déplacée dans la direction d'engagement (ED) et
le bord d'attaque (PLE) a une forme convexe observée dans une direction d'observation perpendiculaire au plan de la plaque de poussoir (PI.PU)
de sorte qu'une partie centrale du bord d'attaque (PLE) soit une distance plus faible jusqu'à l'entrée (N.1) que les deux bords latéraux de la plaque de poussoir (PI.PU) à côté de cette partie centrale.

15. Arrangement d'emballage pour emballer un objet (B) avec un matériau d'emballage (WM),
l'arrangement d'emballage comprend
- une chambre conçue pour contenir un objet (B) à emballer,
- une entrée (N.1) à travers laquelle un matériau d'emballage (WM) peut être inséré dans la chambre,
- un moyen de rotation pour faire tourner un objet (B) dans la chambre, et
- un appareil d'alimentation selon l'une des revendications précédentes pour insérer un matériau d'emballage (WM) dans l'entrée (N.1),
l'arrangement d'emballage est conçu de sorte que l'objet tournant (B) dans la chambre saisisse les deux couches (2L) du matériau d'emballage (WM) qui sont insérées dans l'entrée (N.1).

16. Procédé d'alimentation d'un matériau d'emballage (WM) vers une entrée (N.1) d'une chambre,
chambre dans laquelle un objet (B) doit être emballé avec un matériau d'emballage (WM),
le procédé comprend les étapes réalisées automatiquement dans lesquelles
une plaque (PI.PU) d'une unité est déplacée dans une direction d'engagement (ED) vers l'entrée (N.1) jusqu'à ce que la plaque (PI.PU) atteigne une position d'engagement finale,
un matériau d'emballage (WM) est approvisionné depuis un réservoir (RL) de sorte que
- une partie d'attaque du matériau d'emballage (WM) forme une zone terminale libre de relâchement et relâchée (LEA) avec un bord inférieur,
- la zone terminale libre (LEA) passe dans une position entre la plaque (PI.PU) et l'entrée (N.1) avant que la plaque (PI.PU) atteigne la position d'engagement finale, et
- la zone terminale libre de relâchement (LEA) augmente jusqu'à ce que le matériau d'emballage (WM) atteigne la chambre, et
- la plaque (PI.PU) heurte la zone terminale libre de relâchement (LEA) au-dessus du bord inférieur de la zone terminale libre (LEA) alors que la plaque (PI.PU) est déplacée dans la direction d'engagement (ED) et avant que la plaque (PI.PU) atteigne sa position d'engagement finale,
**caractérisé en ce que**
l'unité est une unité de poussée et la plaque déplacée est une plaque de poussoir (PI.PU) et le procédé comprend en outre les étapes dans lesquelles
- la plaque de poussoir (PI.PU) heurte latéralement la zone terminale libre de relâchement (LEA) au-dessus du bord inférieur de la zone terminale libre (LEA) alors que la plaque de poussoir (PI.PU) est déplacée dans la direction d'engagement (ED) et avant que la plaque de poussoir (PI.PU) atteigne sa position d'engagement finale et
- le mouvement supplémentaire de la plaque de poussoir (PI.PU) dans la direction d'engagement (ED) presse l'énergie cinématique dans une direction latérale sur la zone terminale libre relâchée (LEA),
- l'énergie cinématique pressée et l'inertie de la zone terminale libre relâchée (LEA) forment un renflement (Bu) dans la zone terminale libre (LEA),
- le mouvement supplémentaire de la plaque de poussoir (PI.PU) décale le renflement formé (Bu) vers l'entrée (N.1) et
- ce renflement (Bu) à insérer dans l'entrée (N.1) de sorte qu'une partie du matériau d'emballage (WM) avec les deux couches se chevauchant (2L) soit insérée dans l'entrée (N.1).

17. Procédé selon la revendication 16,
**caractérisé en ce que**
l'étape de déplacement de la plaque de poussoir (PI.PU) dans la position d'engagement finale comprend l'étape dans laquelle
la plaque de poussoir (PI.PU) est déplacée dans la position d'engagement finale de sorte que la plaque de poussoir (PI.PU)
- s'engage dans l'entrée (N.1) et
- presse une zone de dessus du renflement (Bu) contre la surface de l'objet (B) dans la chambre.

18. Procédé selon la revendication 16 ou la revendication 17,
**caractérisé en ce que**
les étapes
- d'approvisionnement d'un matériau d'emballage (WM) depuis le réservoir (RL) et
- de décalage du renflement (Bu) vers l'entrée (N.1)
sont réalisées de sorte que la zone terminale libre (LEA) reste relâchée jusqu'à ce que le matériau d'emballage (WM) atteigne l'entrée (N.1).

19. Procédé selon l'une des revendications 16 à 18,
**caractérisé en ce que**
une unité de fermeture (CU) est pivotée dans une position de fermeture et
la zone terminale libre de relâchement (LEA) tombe sur l'unité de fermeture (CU) dans la position de fermeture avant que la plaque déplacée (PI.PU) heurte latéralement la zone terminale libre (LEA).

20. Procédé d'emballage d'un objet (B) dans une chambre avec un matériau d'emballage (WM),
le procédé comprend les étapes dans lesquelles
- l'objet (B) dans la chambre est pivoté,
- deux couches (2L) du matériau d'emballage (WM) sont insérées dans une entrée (N.1) de la chambre par application d'un procédé selon l'une des revendications 16 à 18, et
- l'objet en rotation (B) saisit les deux couches (2L) du matériau d'emballage (WM) qui sont insérées dans l'entrée (N.1).
